(19) **Europäisches Patentamt**
**European Patent Office**
**Office européen des brevets**

(11) **EP 4 486 037 A1**

(12) **EUROPEAN PATENT APPLICATION**
published in accordance with Art. 153(4) EPC

(43) Date of publication:
**01.01.2025 Bulletin 2025/01**

(21) Application number: **23777897.2**

(22) Date of filing: **20.03.2023**

(51) International Patent Classification (IPC):
***H04W 72/12*** (2023.01)

(52) Cooperative Patent Classification (CPC):
**H04W 72/12**

(86) International application number:
**PCT/CN2023/082453**

(87) International publication number:
**WO 2023/185523 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022  CN 202210333951**

(71) Applicant: **SHANGHAI LANGBO
COMMUNICATION TECHNOLOGY
COMPANY LIMITED
Shanghai 200240 (CN)**

(72) Inventors:
• **LIU, Zheng
Shanghai 201206 (CN)**
• **ZHANG, Xiaobo
Shanghai 201206 (CN)**

(74) Representative: **Zhang, Fan
Am Quälenberg 3A
38124 Braunschweig (DE)**

(54) **METHOD AND DEVICE FOR WIRELESS COMMUNICATION NODE**

(57)    Disclosed are a method and device for a wireless communication node. A node receives a first information block for determining multiple PDCCH candidates; and the node monitors at least one PDCCH candidate. A first PDCCH candidate is one of the multiple PDCCH candidates, and whether a second PDCCH candidate exists in the multiple PDCCH candidates is used for determining whether the first PDCCH candidate is counted towards a monitoring frequency. The second PDCCH candidate and the first PDCCH candidate occupy the same CCE, have the same scrambling code, and carry DCI of the same format size. The scheduling indication value associated with the first PDCCH candidate is equal to the scheduling indication value associated with the second PDCCH candidate. At least one of two conditions, namely the index of the second PDCCH candidate not being equal to the index of the first PDCCH candidate or the number of serving cells scheduled by the second PDCCH candidate not being equal to the number of serving cells scheduled by the first PDCCH candidate, is satisfied. The present application improves the scheduling capacity.

receiving first information block — 101

↓

monitoring at least one PDCCH candidate — 102

100

FIG. 1

EP 4 486 037 A1

## Description

## BACKGROUND

### TECHNICAL FIELD

The present application relates to transmission methods and devices in wireless communication systems, and in particular to a multi-carrier transmission scheme and device in wireless communications.

### RELATED ART

Application scenarios of future wireless communication systems are becoming increasingly diversified, and different application scenarios have different performance demands on systems. In order to meet different performance requirements of various application scenarios, the 3rd Generation Partner Project (3GPP) Radio Access Network (RAN) #72 plenary decided to conduct the study of New Radio (NR), or what is called fifth Generation (5G). The Work Item (WI) of NR was approved at the 3GPP RAN #75 plenary to standardize the NR.

The multi-carrier (including Carrier Aggregation, abbreviated as CA, and Dual Connectivity, abbreviated as DC) techniques is an integral part of New Radio (NR) technology. To adapt to diverse application scenarios and meet different requests, the 3GPP has been working on the evolution of multi-carrier techniques since from the Rel-15.

### SUMMARY

In the multi-carrier communications, for instance Carrier Aggregation (CA), Cross Carrier Scheduling is supported. In networks supported by the existing standard, such as 5G New Radio (NR) in R17 and of previous versions, for multiple scheduled carriers, scheduling is only supported to be provided on carriers or Physical Downlink Control Channels (PDCCHs) respectively corresponding to the carriers, rather than through a same PDCCH on a same carrier.

To address the issue that a same PDCCH schedules multiple carriers simultaneously in a multicarrier system in NR, the present application discloses a solution. It should be noted that in the description of the present application, PDCCH scheduling in multicarriers is only used as an exemplary application scenario or example; this disclosure is equally applicable to other scenarios confronting similar problems, such as other scenarios having higher demands on the capacity of control channels, which include but are not limited to capacity enhancement system, the system using higher frequency, coverage enhancement system, Unlicensed Spectrum communication, the Internet of Things (IoT), Ultra Reliable Low Latency Communications (URLLC) network and Vehicle-to-Everything (V2X), where similar technical effects can be achieved. Additionally, the adoption of a unified solution for various scenarios, including but not limited to multi-carrier scenarios, contributes to the reduction of hardcore complexity and costs. In the case of no conflict, the embodiments of a first node and the characteristics in the embodiments may be applied to a second node, and vice versa. Particularly, for interpretations of the terminology, nouns, functions and variables (unless otherwise specified) in the present application, refer to definitions given in TS36 series, TS38 series and TS37 series of 3GPP specifications.

The present application provides a method in a first node for wireless communications, comprising:

> receiving a first information block, the first information block being used to determine multiple PDCCH (Physical Downlink Control Chanel) candidates, any one of the multiple PDCCH candidates occupying at least one CCE (Control Channel Element); and
> monitoring at least one PDCCH candidate;
> herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, in the case where the scheduling indication value associated with the first PDCCH candidate and the scheduling indication value associated with the second PDCCH candidate are equal, at least one of two conditions: an index of the second PDCCH candidate is not equal to an index of the first PDCCH candidate or a number of serving cells scheduled by the second PDCCH candidate is not equal to a number of serving cells scheduled by the first PDCCH candidate, is satisfied, thereby avoiding the case in which the number of monitoring times of the PDCCH candidates exceeds the UE's capacity or the complexity of the PDCCH reception increases, while at the same time making full use of the capability of PDCCH candidate monitoring, to decrease the probability of PDCCH blocking and improve scheduling flexibility.

According to one aspect of the present application, the above method is characterized in that the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate.

In one embodiment, that the number of serving cells scheduled by the second PDCCH candidate is greater than the number of serving cells scheduled by the first PDCCH candidate is satisfied, so that when multiple serving cells scheduled by one PDCCH candidate include cell(s) scheduled by another PDCCH candidate, only one PDCCH candidate's monitoring will be counted to avoid redundant occupancy of the monitoring capability.

According to one aspect of the present application, the above method is characterized in comprising:

receiving a second information block;
herein, the second information block is used to determine a first cell group, the first cell group including multiple serving cells; each serving cell in the first cell group corresponds to a scheduling indication value, and a target cell subset comprises serving cells in the first cell group that correspond to a same equal scheduling indication value and are scheduled by a target scheduling cell; the second PDCCH candidate belongs to the target scheduling cell, the equal scheduling indication value corresponding to the serving cells in the target cell subset being used to determine a scheduling indication value associated with the second PDCCH candidate; at least one of a number of bits included in at least one field included in a DCI format carried by the second PDCCH candidate or a number of fields included in the DCI format carried by the second PDCCH candidate is related to a number of serving cells included in the target cell subset.

In one embodiment, the target cell subset comprises serving cells in the first cell group that correspond to the same equal scheduling indication value and are scheduled by the target scheduling cell, thus maximizing the use of existing designs, reducing the standard complexity and signaling overhead.

According to one aspect of the present application, the above method is characterized in that a first cell subset includes the serving cell(s) scheduled by the first PDCCH candidate, and a second cell subset includes the serving cell(s) scheduled by the second PDCCH candidate; a relationship between the first cell subset and the second cell subset is used to determine whether a number of monitoring times of PDCCH candidate(s) for the first cell subset and a number of monitoring times of PDCCH candidate(s) for the second cell subset are separately counted.

In one embodiment, the number of times of monitoring of the PDCCH candidate(s) of the first cell subset and the number of times of monitoring of the PDCCH candidate(s) of the second cell subset are separately counted, which ensures the budget for monitoring of each serving cell, thereby ensuring scheduling capacity.

According to one aspect of the present application, the above method is characterized in that a search space set to which the first PDCCH candidate belongs is a first search space set, and a control resource set associated with the first search space set is a first control resource set, the first control resource set including multiple CCEs, and the scheduling indication value associated with the first PDCCH candidate is used to determine a CCE subset occupied by the first PDCCH candidate in the first control resource set.

According to one aspect of the present application, the above method is characterized in comprising:

transmitting a third information block;
herein, the third information block is used to indicate a capability parameter set of a transmitter of the third information block, the capability parameter set of the transmitter of the third information block including a first parameter and a second parameter; the first parameter is used to indicate whether a transmitter of the third information block supports a number of downlink serving cells scheduled by a same PDCCH being greater than 1, while the second parameter is used to indicate whether the transmitter of the third information block supports a number of uplink serving cells scheduled by a same PDCCH being greater than 1.

In one embodiment, the common scheduling capability of the user equipment (UE) is indicated separately for uplink and downlink, thus improving the scheduling flexibility for both uplink and downlink.

According to one aspect of the present application, the above method is characterized in that each CCE occupied by the first PDCCH candidate belongs to a first time window in time domain, and a subcarrier spacing (SCS) of subcarriers occupied in frequency domain by each CCE occupied by the first PDCCH candidate is equal to a first SCS; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the first threshold and the second threshold are both related to a characteristic proportional value, and a totally counted number of serving cells scheduled by the first PDCCH candidate is used to determine the characteristic proportional value, the characteristic proportional value being no less than 0.

In one embodiment, the totally counted number of serving cells scheduled by the first PDCCH candidate is used to determine a characteristic proportional value, which further reduces the blocking probability of scheduling.

The present application provides a method in a second node for wireless communications, comprising:

transmitting a first information block, the first information block being used to determine multiple PDCCH (Physical Downlink Control Chanel) candidates, any one of the multiple PDCCH candidates occupying at least one CCE (Control Channel Element); and

determining at least one PDCCH candidate;

herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

According to one aspect of the present application, the above method is characterized in that the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate.

According to one aspect of the present application, the above method is characterized in comprising:

transmitting a second information block;

herein, the second information block is used to determine a first cell group, the first cell group including multiple serving cells; each serving cell in the first cell group corresponds to a scheduling indication value, and a target cell subset comprises serving cells in the first cell group that correspond to a same equal scheduling indication value and are scheduled by a target scheduling cell; the second PDCCH candidate belongs to the target scheduling cell, the equal scheduling indication value corresponding to the serving cells in the target cell subset being used to determine a scheduling indication value associated with the second PDCCH candidate; at least one of a number of bits included in at least one field included in a DCI format carried by the second PDCCH candidate or a number of fields included in the DCI format carried by the second PDCCH candidate is related to a number of serving cells included in the target cell subset.

According to one aspect of the present application, the above method is characterized in that a first cell subset includes the serving cell(s) scheduled by the first PDCCH candidate, and a second cell subset includes the serving cell(s) scheduled by the second PDCCH candidate; a relationship between the first cell subset and the second cell subset is used to determine whether a number of monitoring times of PDCCH candidate(s) for the first cell subset and a number of monitoring times of PDCCH candidate(s) for the second cell subset are separately counted.

According to one aspect of the present application, the above method is characterized in that a search space set to which the first PDCCH candidate belongs is a first search space set, and a control resource set associated with the first search space set is a first control resource set, the first control resource set including multiple CCEs, and the scheduling indication value associated with the first PDCCH candidate is used to determine a CCE subset occupied by the first PDCCH candidate in the first control resource set.

According to one aspect of the present application, the above method is characterized in comprising:

receiving a third information block;

herein, the third information block is used to indicate a capability parameter set of a transmitter of the third information block, the capability parameter set of the transmitter of the third information block including a first parameter and a second parameter; the first parameter is used to indicate whether a transmitter of the third information block supports a number of downlink serving cells scheduled by a same PDCCH being greater than 1, while the second parameter is used to indicate whether the transmitter of the third information block supports a number of uplink serving cells scheduled by a same PDCCH being greater than 1.

According to one aspect of the present application, the above method is characterized in that each CCE occupied by the first PDCCH candidate belongs to a first time window in time domain, and a subcarrier spacing (SCS) of subcarriers occupied in frequency domain by each CCE occupied by the first PDCCH candidate is equal to a first SCS; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the first threshold and the second threshold are both related to a characteristic proportional value, and a totally counted number of serving cells scheduled by the first PDCCH candidate is used to determine the characteristic proportional value, the characteristic proportional value being no less than 0.

The present application provides a first node for wireless communications, comprising:

a first transceiver, receiving a first information block, the first information block being used to determine multiple PDCCH (Physical Downlink Control Chanel) candidates, any one of the multiple PDCCH candidates occupying at least one CCE (Control Channel Element); and
a first receiver, monitoring at least one PDCCH candidate;
herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

The present application provides a second node for wireless communications, comprising:

a second transceiver, transmitting a first information block, the first information block being used to determine multiple PDCCH (Physical Downlink Control Chanel) candidates, any one of the multiple PDCCH candidates occupying at least one CCE (Control Channel Element); and
a first transmitter, determining at least one PDCCH candidate;
herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

## BRIEF DESCRIPTION OF THE DRAWINGS

Other features, objects and advantages of the present application will become more apparent from the detailed description of non-restrictive embodiments taken in conjunction with the following drawings:

FIG. 1 illustrates a flowchart of a first information block and PDCCH candidates according to one embodiment of the present application.

FIG. 2 illustrates a schematic diagram of a network architecture according to one embodiment of the present application.

FIG. 3 illustrates a schematic diagram of a radio protocol architecture of a user plane and a control plane according to one embodiment of the present application.

FIG. 4 illustrates a schematic diagram of a first node and a second node according to one embodiment of the present application.

FIG. 5 illustrates a flowchart of radio signal transmission according to one embodiment of the present application.

FIG. 6 illustrates a schematic diagram of a relationship between a first PDCCH candidate and a second PDCCH candidate according to one embodiment of the present application.

FIG. 7 illustrates a schematic diagram of a target cell subset according to one embodiment of the present application.

FIG. 8 illustrates a schematic diagram of a relationship between a first cell subset and a second cell subset according to one embodiment of the present application.

FIG. 9 illustrates a schematic diagram of a scheduling indication value associated with a first PDCCH candidate according to one embodiment of the present application.

FIG. 10 illustrates a schematic diagram of a first parameter and a second parameter according to one embodiment of the present application.

FIG. 11 illustrates a schematic diagram of a first threshold and a second threshold according to one embodiment of the present application.

FIG. 12 illustrates a structure block diagram of a processing device in a first node according to one embodiment of the present application.

FIG. 13 illustrates a structure block diagram of a processing device in a second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

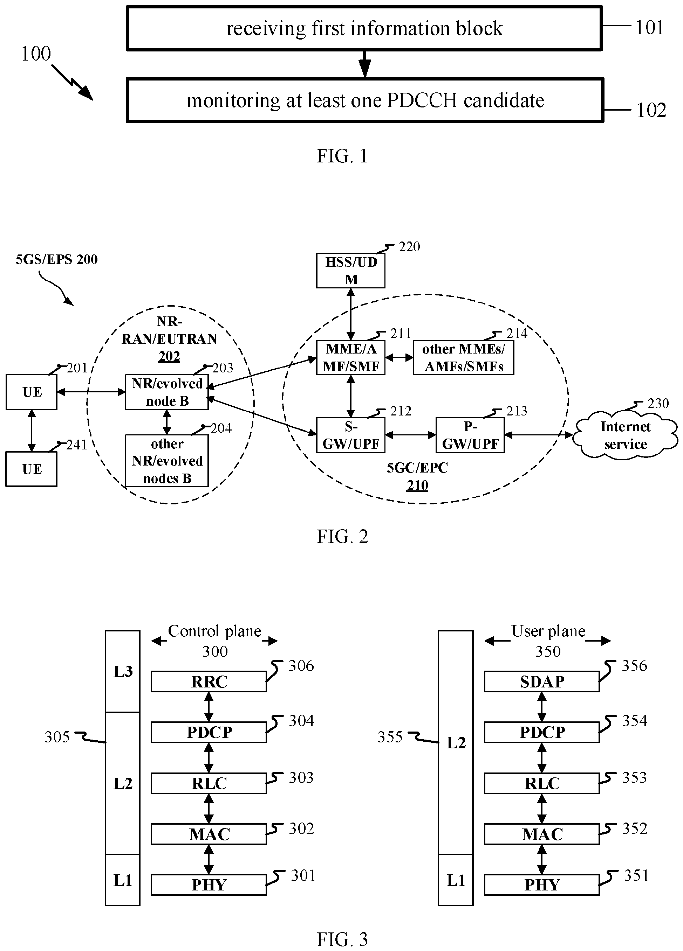

Embodiment 1 illustrates a flowchart 100 of a first information block and PDCCH candidates according to one embodiment of the present application, as shown in FIG. 1. In FIG. 1, each step represents a step, it should be particularly noted that the sequence order of each box herein does not restrict a chronological order of steps marked respectively by these boxes.

In Embodiment 1, the first node of the present application receives a first information block in step 101, the first information block being used to determine multiple PDCCH (Physical Downlink Control Chanel) candidates, any one of the multiple PDCCH candidates occupying at least one CCE (Control Channel Element); and the first node of the present application monitors at least one PDCCH candidate in step 102; herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, the first information block is transmitted via an air interface or a wireless interface.

In one embodiment, the first information block is transmitted via a higher layer signaling or a physical layer signaling.

In one embodiment, the first information block comprises all or part of a higher layer signaling or a physical layer signaling.

In one embodiment, the first information block comprises all or part of a Radio Resource Control (RRC) signaling.

In one embodiment, the first information block comprises all or part of a Medium Access Control (MAC) layer signaling.

In one embodiment, the first information block comprises all or part of a System Information Block (SIB).

In one embodiment, the first information block is transmitted through a Physical Downlink Shared Channel (PDSCH).

In one embodiment, the first information block is Cell Specific or UE-specific.

In one embodiment, the first information block is Per Bandwidth-Part (BWP) Configured.

In one embodiment, the first information block comprises all or partial fields in a Downlink Control Information (DCI) signaling.

In one embodiment, the first information block comprises more than one sub-information-block, and each sub-information-block in the first information block is an Information Element (IE) or a field included in the first information block; the at least one sub-information-block included in the first information block is used to indicate the multiple PDCCH candidates.

In one embodiment, the first information block comprises a field "CORESETPoolIndex" in an IE "ControlResource Set".

In one embodiment, the first information block comprises all or partial fields in an IE "PDCCH-Config".

In one embodiment, the first information block comprises all or partial fields in an IE "ControlResourceSet" in an IE "PDCCH-Config".

In one embodiment, the first information block comprises all or partial fields in an IE "SearchSpace".

In one embodiment, the first information block comprises all or partial fields in an IE "BWP-DownlinkCommon".

In one embodiment, the first information block comprises all or partial fields in an IE "BWP-DownlinkDedicated".

In one embodiment, the sentence "the first information block is used to determine multiple PDCCH candidates" includes the following meaning: the first information block is used by the first node in the present application to determine the multiple PDCCH candidates.

In one embodiment, the sentence "the first information block is used to determine multiple PDCCH candidates" includes the following meaning: all or part included in the first information block is used to explicitly or implicitly indicate at least one PDCCH candidate among the multiple PDCCH candidates.

In one embodiment, "the first information block is used to determine multiple PDCCH candidates" includes the following meaning: all or part included in the first information block is used to explicitly or implicitly indicate N1 PDCCH candidates, and any PDCCH candidate among the multiple PDCCH candidates is one of the N1 PDCCH candidates, N1 being a positive integer greater than 1; the first threshold and the second threshold of the present application are used to determine the multiple PDCCH candidates from the N1 PDCCH candidates.

In one embodiment, "the first information block is used to determine multiple PDCCH candidates" and "all or part included in the first information block is used to explicitly or implicitly indicate a Control Resource Set (CORESET) to which at least one PDCCH candidate among the multiple PDCCH candidates belongs" are equivalent or may be used interchangeably.

In one embodiment, "the first information block is used to determine multiple PDCCH candidates" and "all or part included in the first information block is used to explicitly or implicitly indicate a search space set to which at least one PDCCH candidate among the multiple PDCCH candidates belongs" are equivalent or may be used interchangeably.

In one embodiment, "the first information block is used to determine multiple PDCCH candidates" and "all or part included in the first information block is used to explicitly or implicitly indicate time-frequency resources occupied by at least one PDCCH candidate among the multiple PDCCH candidates" are equivalent or may be used interchangeably.

In one embodiment, "the first information block is used to determine multiple PDCCH candidates" and "all or part included in the first information block is used to explicitly or implicitly indicate DCI format(s) carried by at least one PDCCH candidate among the multiple PDCCH candidates" are equivalent or may be used interchangeably.

In one embodiment, "the first information block is used to determine multiple PDCCH candidates" and "all or part included in the first information block is used to explicitly or implicitly indicate at least one control channel element (CCE) occupied by at least one PDCCH candidate among the multiple PDCCH candidates belongs" are equivalent or may be used interchangeably.

In one embodiment, any one of the multiple PDCCH candidates comprises a PDCCH demodulation reference signal (DMRS).

In one embodiment, the multiple PDCCH candidates are all the PDCCH candidates configured by the first information block.

In one embodiment, the multiple PDCCH candidates all belong to a same given time window in the time domain.

In one embodiment, the multiple PDCCH candidates all belong to a first time window in this application in the time domain.

In one embodiment, the number of CCE(s) occupied by any one of the multiple PDCCH candidates is equal to one of 1, 2, 4, 8, 16.

In one embodiment, there are two PDCCH candidates among the multiple PDCCH candidates by which the numbers of CCEs occupied are equal.

In one embodiment, the numbers of CCEs occupied by any two PDCCH candidates among the multiple PDCCH candidates are not equal.

In one embodiment, any one of the multiple PDCCH candidates is a Monitored PDCCH Candidate.

In one embodiment, any one of the multiple PDCCH candidates is a Physical Downlink Control Channel (PDCCH) Candidate using one or more DCI formats.

In one embodiment, any one of the multiple PDCCH candidates is a PDCCH candidate that employs one or more DCI Payload Sizes.

In one embodiment, any one of the multiple PDCCH candidates is a time-frequency resource set carrying a specific one or more formats of DCI(s).

In one embodiment, any one of the multiple PDCCH candidates is a CCE set carrying a specific one or more payload sizes of DCI format(s).

In one embodiment, the multiple PDCCH candidates include two PDCCH candidates occupying the same time-frequency resources.

In one embodiment, any two PDCCH candidates of the multiple PDCCH candidates have unequal indexes.

In one embodiment, the multiple PDCCH candidates include two PDCCH candidates with equal indexes.

In one embodiment, there are two PDCCH candidates among the multiple PDCCH candidates occupying the same CCE set.

In one embodiment, any two PDCCH candidates of the multiple PDCCH candidates have unequal indexes or respectively belong to search space sets with unequal indexes.

In one embodiment, any one of the multiple PDCCH candidates occupies at least 1 CCE in the time-frequency domain.

In one embodiment, the number of CCEs occupied by any one of the multiple PDCCH candidates is equal to the aggregation level (AL) of this PDCCH candidate.

In one embodiment, any CCE occupied by any one of the multiple PDCCH candidates is a non-overlapped CCE.

In one embodiment, 1 CCE occupied by one of the multiple PDCCH candidates is a CCE other than non-overlapped CCEs.

In one embodiment, any CCE occupied by any one of the multiple PDCCH candidates comprises 6 resource element groups (REGs).

In one embodiment, any CCE occupied by any one of the multiple PDCCH candidates comprises an RE occupied by a PDCCH DMRS.

In one embodiment, all or part included in the first information block is used to explicitly or implicitly indicate the number of CCE(s) occupied by at least one PDCCH candidate among the multiple PDCCH candidates.

In one embodiment, the number of CCEs occupied by any one of the multiple PDCCH candidates is equal to the aggregation level (AL) of this PDCCH candidate, all or part included in the first information block is used to explicitly or implicitly indicate the aggregation level (AL) of at least one PDCCH candidate among the multiple PDCCH candidates.

In one embodiment, the number of CCEs occupied by any one of the multiple PDCCH candidates is equal to the aggregation level (AL) of this PDCCH candidate, all or part included in an information block other than the first information block is used to explicitly or implicitly indicate the aggregation level (AL) of at least one PDCCH candidate among the multiple PDCCH candidates.

In one embodiment, the expressions "monitoring at least 1 PDCCH candidate" and "decoding at least 1 PDCCH candidate" are equivalent or may be used interchangeably.

In one embodiment, the expressions "monitoring at least 1 PDCCH candidate" and "blindly decoding at least 1 PDCCH candidate" are equivalent or may be used interchangeably.

In one embodiment, the expressions "monitoring at least 1 PDCCH candidate" and "decoding and CRC-checking at least 1 PDCCH candidate" are equivalent or may be used interchangeably.

In one embodiment, the expressions "monitoring at least 1 PDCCH candidate" and "decoding and RNTI (i.e., Radio Network Temporary Identity) scrambled CRC checking of at least 1 PDCCH candidate "are equivalent or may be used interchangeably.

In one embodiment, the expressions "monitoring at least 1 PDCCH candidate" and "decoding at least 1 PDCCH candidate based on monitored DCI (i.e., Downlink Control Information) Format(s)" are equivalent or may be used interchangeably.

In one embodiment, the expressions "monitoring at least 1 PDCCH candidate" and "decoding at least 1 PDCCH candidate based on monitored one or more DCI formats" are equivalent or may be used interchangeably.

In one embodiment, the expressions "monitoring at least 1 PDCCH candidate" and "decoding at least 1 PDCCH candidate based on monitored one or more DCI payload sizes" are equivalent or may be used interchangeably.

In one embodiment, the expressions "monitoring at least 1 PDCCH candidate" and "monitoring at least 1 PDCCH candidate of the multiple PDCCH candidates" are equivalent or may be used interchangeably.

In one embodiment, the second PDCCH candidate is present among the multiple PDCCH candidates.

In one embodiment, the second PDCCH candidate is not present among the multiple PDCCH candidates.

In one embodiment, the second PDCCH candidate and the first PDCCH candidate are two different PDCCH candidates determined based on the search space set.

In one embodiment, the second PDCCH candidate is a PDCCH determined based on the configuration of the first information block.

In one embodiment, the second PDCCH candidate cannot be obtained based on the configuration of the first information block.

In one embodiment, the second PDCCH candidate is a real PDCCH candidate.

In one embodiment, the second PDCCH candidate is a virtual PDCCH candidate.

In one embodiment, the first node of the present application monitors at least 1 PDCCH candidate in a time window.

In one embodiment, any one PDCCH candidate monitored by the first node in this application in a time window is one of the multiple PDCCH candidates.

In one embodiment, a PDCCH candidate monitored by the first node in this application in a time window is a PDCCH candidate other than the multiple PDCCH candidates.

In one embodiment, the first node monitors at least 1 PDCCH candidate in the first time window in this application.

In one embodiment, the number of PDCCH candidates monitored by the first node in a time window is greater than 1.

In one embodiment, the number of PDCCH candidates monitored by the first node in a time window may be equal to 1.

In one embodiment, when the second PDCCH is present, the first PDCCH candidate and the second PDCCH candidate belong to a same Search Space Set.

In one embodiment, when the second PDCCH is present, the first PDCCH candidate and the second PDCCH candidate belong to a same control resource set.

In one embodiment, when the second PDCCH is present, the first PDCCH candidate and the second PDCCH candidate respectively belong to two different search space sets.

In one embodiment, when the second PDCCH is present, the first PDCCH candidate and the second PDCCH candidate respectively belong to two different control resource sets.

In one embodiment, when the second PDCCH is present, an index of a control resource set associated with a search space set to which the first PDCCH candidate belongs and an index of a control resource set associated with a search space set to which the second PDCCH candidate belongs are not equal.

In one embodiment, when the second PDCCH is present, an index of a control resource set associated with a search space set to which the first PDCCH candidate belongs and an index of a control resource set associated with a search space set to which the second PDCCH candidate belongs are equal.

In one embodiment, when the second PDCCH is present, an index of a search space set to which the first PDCCH candidate belongs and an index of a search space set to which the second PDCCH candidate belongs are not equal.

In one embodiment, when the second PDCCH is present, an index of a search space set to which the first PDCCH candidate belongs and an index of a search space set to which the second PDCCH candidate belongs are equal.

In one embodiment, when the second PDCCH is present, an index of a search space set to which the first PDCCH candidate belongs is smaller than an index of a search space set to which the second PDCCH candidate belongs.

In one embodiment, when the second PDCCH is present, an index of a search space set to which the first PDCCH candidate belongs is greater than an index of a search space set to which the second PDCCH candidate belongs.

In one embodiment, when the second PDCCH is present, an index of the first PDCCH candidate in a search space set to which the first PDCCH candidate belongs is smaller than an index of the second PDCCH candidate in a search space set to which the second PDCCH candidate belongs.

In one embodiment, when the second PDCCH is present, an index of the first PDCCH candidate in a search space set to which the first PDCCH candidate belongs is greater than an index of the second PDCCH candidate in a search space set to which the second PDCCH candidate belongs.

In one embodiment, when the second PDCCH is present, an index of the first PDCCH candidate in a search space set to which the first PDCCH candidate belongs is equal to an index of the second PDCCH candidate in a search space set to which the second PDCCH candidate belongs.

In one embodiment, when the second PDCCH is present, an index of the first PDCCH candidate in a search space set to which the first PDCCH candidate belongs and an index of the second PDCCH candidate in a search space set to which the second PDCCH candidate belongs are not equal.

In one embodiment, when the second PDCCH is present, the first PDCCH candidate is a PDCCH candidate among the multiple PDCCH candidates, and the second PDCCH candidate is a PDCCH candidate among the multiple PDCCH candidates.

In one embodiment, the statements that "whether there is a second PDCCH candidate among the multiple PDCCH candidates is used to determine whether the first PDCCH candidate is counted for monitoring" and that "whether there is one PDCCH candidate among the multiple PDCCH candidates other than the first PDCCH that occupies the same CCE(s) and has the same scrambling as the first PDCCH, that carries the same DCI format size as the first PDCCH, that is associated with an equal scheduling indication value as the first PDCCH and has a different index value or includes an unequal number of serving cells scheduled than the first PDCCH is used to determine whether the first PDCCH candidate is counted for monitoring" are equivalent or may be used interchangeably.

In one embodiment, "whether there is a second PDCCH candidate among the multiple PDCCH candidates is used to determine whether the first PDCCH candidate is counted for monitoring" includes the following meaning: whether the second PDCCH candidate is present among the multiple PDCCH candidates is used by the first node in this application to determine whether the first PDCCH candidate is counted for monitoring.

In one embodiment, "whether there is a second PDCCH candidate among the multiple PDCCH candidates is used to determine whether the first PDCCH candidate is counted for monitoring" includes the following meaning: whether the second PDCCH candidate is present among the multiple PDCCH candidates is used to determine whether the first PDCCH candidate is counted for monitoring based on a conditional relationship or mapping relationship.

In one embodiment, "whether there is a second PDCCH candidate among the multiple PDCCH candidates is used to determine whether the first PDCCH candidate is counted for monitoring" includes the following meaning: when the second PDCCH candidate is present among the multiple PDCCH candidates, the first PDCCH candidate is not counted for monitoring; otherwise, the first PDCCH candidate is counted for monitoring.

In one embodiment, "whether there is a second PDCCH candidate among the multiple PDCCH candidates is used to determine whether the first PDCCH candidate is counted for monitoring" includes the following meaning: when a PDCCH candidate that meets all characteristics of the second PDCCH candidate is present among the multiple PDCCH candidates, the first PDCCH candidate is not counted for monitoring; otherwise, the first PDCCH candidate is counted for monitoring.

In one embodiment, "whether there is a second PDCCH candidate among the multiple PDCCH candidates is used to determine whether the first PDCCH candidate is counted for monitoring" includes the following meaning: when the second PDCCH candidate is present among the multiple PDCCH candidates, the first PDCCH candidate is counted for monitoring; otherwise, the first PDCCH candidate is not counted for monitoring.

In one embodiment, the first PDCCH candidate is counted for monitoring.

In one embodiment, the first PDCCH candidate is not counted for monitoring.

In one embodiment, that the first PDCCH candidate is counted for monitoring means that the first PDCCH candidate is counted at least once for monitoring.

In one embodiment, that the first PDCCH candidate is counted for monitoring means that the first PDCCH candidate is counted as at least one time of PDCCH monitoring.

In one embodiment, that the first PDCCH candidate is counted for monitoring means that the first PDCCH candidate is counted as at least one time of PDCCH Blind Detection.

In one embodiment, that the first PDCCH candidate is counted for monitoring means that the first PDCCH candidate is counted as at least one time of PDCCH Blind Decoding.

In one embodiment, that the first PDCCH candidate is counted for monitoring means that monitoring the first PDCCH candidate requires at least one time of Channel Decoding.

In one embodiment, that the first PDCCH candidate is counted for monitoring means that the first PDCCH candidate is counted as at least one monitored PDCCH candidate.

In one embodiment, that the first PDCCH candidate is counted for monitoring means that the first PDCCH candidate is counted as one or multiple times of monitoring for a total number of monitoring times.

In one embodiment, that the first PDCCH candidate is counted for monitoring means that the first PDCCH candidate is counted for a total number of monitoring times.

In one embodiment, that the first PDCCH candidate is counted for monitoring means that the first PDCCH candidate influences the Budget for the PDCCH candidate monitoring times.

In one embodiment, that the first PDCCH candidate is not counted for monitoring means that monitoring of the first PDCCH candidate does not influence the counting of a total number of monitoring times, or that the monitoring of the first PDCCH candidate is counted as 0 monitoring for the total number of monitoring times, or that the monitoring of the first PDCCH candidate does not require an independent decoding.

In one embodiment, "the first PDCCH candidate and the second PDCCH candidate occupy the same CCE(s)" includes the following meaning: when the second PDCCH candidate is present, the first PDCCH candidate and the second PDCCH candidate occupy the same CCE(s).

In one embodiment, the statements that "the first PDCCH candidate and the second PDCCH candidate occupy the same CCE(s)" and "a CCE set occupied by the first PDCCH candidate is exactly the same as a CCE set occupied by the second PDCCH candidate" are equivalent or may be used interchangeably.

In one embodiment, the statements that "the first PDCCH candidate and the second PDCCH candidate occupy the same CCE(s)" and "a CCE set occupied by the first PDCCH candidate and a CCE set occupied by the second PDCCH candidate are fully overlapped" are equivalent or may be used interchangeably.

In one embodiment, the statements that "the first PDCCH candidate and the second PDCCH candidate occupy the same CCE(s)" and "time-frequency resources occupied by the first PDCCH candidate and time-frequency resources occupied by the second PDCCH candidate are fully overlapped" are equivalent or may be used interchangeably.

In one embodiment, the statements that "the first PDCCH candidate and the second PDCCH candidate occupy the same CCE(s)" and "the first PDCCH candidate and the second PDCCH candidate occupy exactly the same time-frequency resources" are equivalent or may be used interchangeably.

In one embodiment, the statements that "the first PDCCH candidate and the second PDCCH candidate occupy the same CCE(s)" and "any CCE occupied by the second PDCCH candidate is simultaneously occupied by the first PDCCH candidate, and any CCE occupied by the first PDCCH candidate is simultaneously occupied by the second PDCCH candidate" are equivalent or may be used interchangeably.

In one embodiment, "the first PDCCH candidate has a same scrambling as the second PDCCH candidate" includes the following meaning: when the second PDCCH candidate is present, the first PDCCH candidate has a same scrambling as the second PDCCH candidate.

In one embodiment, "the first PDCCH candidate has a same scrambling as the second PDCCH candidate" includes the following meaning: a first scrambling sequence is a scrambling sequence of a PDCCH carried by the first PDCCH candidate, and a second scrambling sequence is a scrambling sequence of a PDCCH carried by the second PDCCH candidate, the first scrambling sequence and the second scrambling sequence being the same.

In one embodiment, "the first PDCCH candidate has a same scrambling as the second PDCCH candidate" includes the following meaning: elements in a scrambling sequence of the first PDCCH candidate and elements in a scrambling sequence of the second PDCCH candidate are in one-to-one correspondence

In one embodiment, "the first PDCCH candidate has a same scrambling as the second PDCCH candidate" includes the following meaning: an initial value of a Generator for the scrambling sequence of the first PDCCH candidate is equal to an initial value of a Generator for the scrambling sequence of the second PDCCH candidate.

In one embodiment, "the first PDCCH candidate has a same scrambling as the second PDCCH candidate" includes the following meaning: the first node in the present application assumes that the first PDCCH candidate has a same scrambling as the second PDCCH candidate.

In one embodiment, "the first PDCCH candidate has a same scrambling as the second PDCCH candidate" includes the following meaning: an initial value of a generating register for the scrambling sequence of the first PDCCH candidate is equal to an initial value of a generating register for the scrambling sequence of the second PDCCH candidate.

In one embodiment, "the first PDCCH candidate has a same scrambling as the second PDCCH candidate" includes the following meaning: the same one Gold Sequence of a length 31 generates the scrambling sequence of the first PDCCH candidate and the scrambling sequence of the second PDCCH candidate with identical Generator initial values.

In one embodiment, "the first PDCCH candidate has a same scrambling as the second PDCCH candidate" includes the following meaning: the first node in the present application assumes that a first bit block having been through scrambling of a first scrambling sequence is used for generating a physical channel carried by the first PDCCH candidate, and the first node in the present application assumes that a second bit block having been through scrambling of a second scrambling sequence is used for generating a physical channel carried by the second PDCCH candidate, the first scrambling sequence and the second scrambling sequence being the same; the first bit block comprises more than one bit, and the second bit block comprises more than one bit. In one subsidiary embodiment of the above embodiment, the first bit block is an output by a DCI payload and CRC through Channel Coding and Rate Matching, while the second bit block is an output by a DCI payload and CRC through Channel Coding and Rate Matching. In one subsidiary embodiment of the above embodiment, the first bit block being through scrambling of the first scrambling sequence is before Modulation, while the second bit block being through scrambling of the first scrambling sequence is before Modulation. In one subsidiary embodiment of the above embodiment, a physical channel carried by the first PDCCH candidate is generated by the first bit block sequentially through scrambling of the first scrambling sequence, modulation, Mapping to physical resources, Orthogonal Frequency Division Multiplexing baseband signal generation, and Modulation and Upconversion, while a physical channel carried by the second PDCCH candidate is generated by the second bit block sequentially through scrambling of the second scrambling sequence, modulation, Mapping to physical resources, Orthogonal Frequency Division Multiplexing baseband signal generation, and Modulation and Upconversion.

In one embodiment, "a DCI format carried by the first PDCCH candidate is of equal size as a DCI format carried by the second PDCCH candidate" includes the following meaning: the first node in the present application assumes that the DCI format carried by the first PDCCH candidate and the DCI format carried by the second PDCCH candidate are of equal size.

In one embodiment, "a DCI format carried by the first PDCCH candidate is of equal size as a DCI format carried by the second PDCCH candidate" includes the following meaning: when the second PDCCH candidate is present, the DCI format carried by the first PDCCH candidate and the DCI format carried by the second PDCCH candidate are of equal size.

In one embodiment, "a DCI format carried by the first PDCCH candidate is of equal size as a DCI format carried by the second PDCCH candidate" includes the following meaning: a DCI Payload carried by the first PDCCH candidate and a DCI Payload carried by the second PDCCH candidate are of equal size.

In one embodiment, "a DCI format carried by the first PDCCH candidate is of equal size as a DCI format carried by the second PDCCH candidate" includes the following meaning: a number of bits included by the DCI format carried by the first PDCCH candidate and a number of bits included by the DCI format carried by the second PDCCH candidate are equal.

In one embodiment, "a DCI format carried by the first PDCCH candidate is of equal size as a DCI format carried by the second PDCCH candidate" includes the following meaning: a number of bits included by a DCI Payload carried by the first PDCCH candidate and a number of bits included by a DCI Payload carried by the second PDCCH candidate are equal.

In one embodiment, the first node assumes that the DCI Format carried by the first PDCCH candidate is the same as that carried by the second PDCCH candidate.

In one embodiment, the first node assumes that the DCI Format carried by the first PDCCH candidate is different from that carried by the second PDCCH candidate.

In one embodiment, the DCI Format carried by the first PDCCH candidate is one of 0_2 or 1_2, or the DCI Format carried by the first PDCCH candidate is one of 0_3 or 1_3, or the DCI Format carried by the first PDCCH candidate is one of 0 2, 0_ 3, 1_2, or 1_3, or the DCI Format carried by the first PDCCH candidate is one of 0_1, 0_2, 0_3, 1_1, 1_2, or 1_3, or the DCI Format carried by the first PDCCH candidate is one of 0_1, 0_2, 1_1, or 1_2.

In one embodiment, the DCI Format carried by the first PDCCH candidate is one of DCI Formats that are supported by a UE-Specific Search Space Set (USS set).

In one embodiment, when the second PDCCH candidate is present, the DCI Format carried by the second PDCCH candidate is one of 0_2 or 1_2, or the DCI Format carried by the second PDCCH candidate is one of 0_3 or 1_3, or the DCI Format carried by the second PDCCH candidate is one of 0 2, 0_ 3, 1_2, or 1_3, or the DCI Format carried by the second PDCCH candidate is one of 0_1, 0_2, 0_3, 1_1, 1_2, or 1_3, or the DCI Format carried by the second PDCCH candidate is one of 0_1, 0_2, 1_1, or 1_2.

In one embodiment, the first node assumes that the DCI Format carried by the second PDCCH candidate is one of 0_2 or 1_2, or the DCI Format carried by the second PDCCH candidate is one of 0_3 or 1_3, or the DCI Format carried by the second PDCCH candidate is one of 0 2, 0_ 3, 1_2, or 1_3, or the DCI Format carried by the second PDCCH candidate is one of 0_1, 0_2, 0_3, 1_1, 1_2, or 1_3, or the DCI Format carried by the second PDCCH candidate is one of 0_1, 0_2, 1_1, or 1_2.

In one embodiment, when the second PDCCH candidate is present, a DCI Format carried by the second PDCCH candidate is one of DCI Formats that are supported by a UE-Specific Search Space Set (USS set).

In one embodiment, the first node of the present application assumes that a DCI Format carried by the second PDCCH candidate is one of DCI Formats that are supported by a UE-Specific Search Space Set (USS set).

In one embodiment, a scheduling indication value associated with the first PDCCH candidate and a scheduling indication value associated with the second PDCCH candidate are both non-negative numbers.

In one embodiment, the scheduling indication value associated with the first PDCCH candidate is an integer and the scheduling indication value associated with the second PDCCH candidate is an integer.

In one embodiment, the scheduling indication value associated with the first PDCCH candidate is a non-integer and the scheduling indication value associated with the second PDCCH candidate is a non-integer.

In one embodiment, only one of the scheduling indication value associated with the first PDCCH candidate or the scheduling indication value associated with the second PDCCH candidate is an integer.

In one embodiment, the scheduling indication value associated with the first PDCCH candidate is configured or equal to a predefined value and the scheduling indication value associated with the second PDCCH candidate is configured or equal to a predefined value.

In one embodiment, the scheduling indication value associated with the first PDCCH candidate is equal to a CIF (i.e., carrier indicator field) value.

In one embodiment, the scheduling indication value associated with the first PDCCH candidate is equal to a CIF value of a serving cell scheduled by the first PDCCH candidate.

In one embodiment, the scheduling indication value associated with the first PDCCH candidate is a value of an indication other than a CIF.

In one embodiment, the scheduling indication value associated with the first PDCCH candidate is configured independently of the CIF value.

In one embodiment, the scheduling indication value associated with the first PDCCH candidate is equal to a value configured by a field other than the field configuring the CIF value of any serving cell scheduled by the first PDCCH candidate.

In one embodiment, when a field or IE for configuring the scheduling indication value associated with the first PDCCH candidate is absent, the scheduling indication value associated with the first PDCCH candidate is equal to a default value or a predefined value.

In one embodiment, when a field or IE for configuring the scheduling indication value associated with the first PDCCH candidate is absent, the scheduling indication value associated with the first PDCCH candidate is equal to a CIF value.

In one embodiment, a scheduling indication value associated with the first PDCCH candidate is no greater than 7.

In one embodiment, a scheduling indication value associated with the first PDCCH candidate is no greater than 31.

In one embodiment, a scheduling indication value associated with the first PDCCH candidate is greater than 7.

In one embodiment, a scheduling indication value associated with the first PDCCH candidate is greater than 31.

In one embodiment, a value range of the scheduling indication value associated with the first PDCCH candidate is predefined or configurable.

In one embodiment, a value range of the scheduling indication value associated with the first PDCCH candidate is related to the protocol release.

In one embodiment, all or part of the first information block is used to explicitly or implicitly indicate the scheduling indication value associated with the first PDCCH candidate.

In one embodiment, all or part of an information block other than the first information block is used to explicitly or implicitly indicate the scheduling indication value associated with the first PDCCH candidate.

In one embodiment, the scheduling indication value associated with the first PDCCH candidate is an indication value or parameter value associated with at least one serving cell scheduled by the first PDCCH candidate.

In one embodiment, the scheduling indication value associated with the first PDCCH candidate is an indication value or parameter value associated with a serving cell set (or cell list) consisting of all serving cells scheduled by the first PDCCH candidate.

In one embodiment, the scheduling indication value associated with the first PDCCH candidate is an indication value (or parameter value) configured in a scheduling cell common to all the serving cells scheduled by the first PDCCH candidate.

In one embodiment, the scheduling indication value associated with the first PDCCH candidate is an indication value (or parameter value) configured for a serving cell set (or cell list) consisting of all serving cells scheduled by the first PDCCH candidate.

In one embodiment, the scheduling indication value associated with the first PDCCH candidate is an indication value or parameter value being used to determine a CCE subset occupied by the first PDCCH candidate in the first control resource set.

In one embodiment, the scheduling indication value associated with the first PDCCH candidate is an indication value or parameter value being used to determine all PDCCH candidates used to schedule the serving cells scheduled by the first PDCCH candidate.

In one embodiment, the scheduling indication value associated with the first PDCCH candidate is an indication value or parameter value configured together with a serving cell list scheduled by the first PDCCH candidate.

In one embodiment, the scheduling indication value associated with the first PDCCH candidate is an indication value or a parameter value configured by a field belonging to a same IE or by a sub-field belonging to a same field as the field configuring a serving cell list scheduled by the first PDCCH candidate.

In one embodiment, any serving cell scheduled by the first PDCCH candidate is configured with an indication value or a parameter value that is equal to the scheduling indication value associated with the first PDCCH candidate.

In one embodiment, the scheduling indication value associated with the first PDCCH candidate is applicable to any serving cell scheduled by the first PDCCH candidate.

In one embodiment, the scheduling indication value associated with the first PDCCH candidate is equal to an indication value or parameter value corresponding to a serving cell scheduled by the first PDCCH candidate.

In one embodiment, the scheduling indication value associated with the first PDCCH candidate is equal to a value of a sub-field of a field configuring a serving cell list scheduled by the first PDCCH candidate.

In one embodiment, the scheduling indication value associated with the first PDCCH candidate is equal to a value of a field of an IE configuring a search space set to which the first PDCCH candidate belongs.

In one embodiment, the scheduling indication value associated with the first PDCCH candidate is equal to a value of a field of an IE configuring a control resource set to which the first PDCCH candidate belongs.

In one embodiment, the scheduling indication value associated with the first PDCCH candidate is equal to a value of a field of an IE configuring a PDCCH configuration to which the first PDCCH candidate belongs.

In one embodiment, the scheduling indication value associated with the first PDCCH candidate is equal to a value of a sub-field in a DCI format field of an IE configuring a search space set to which the first PDCCH candidate belongs.

In one embodiment, the scheduling indication value associated with the first PDCCH candidate is equal to a value of a field of an IE configuring a CIF of a serving cell scheduled by the first PDCCH candidate.

In one embodiment, the value of a CIF of any serving cell scheduled by the first PDCCH candidate is equal to the scheduling indication value associated with the first PDCCH candidate.

In one embodiment, the scheduling indication value associated with the first PDCCH candidate is equal to a smallest one of CIF values of all serving cells scheduled by the first PDCCH candidate.

In one embodiment, the scheduling indication value associated with the first PDCCH candidate is equal to a greatest one of CIF values of all serving cells scheduled by the first PDCCH candidate.

In one embodiment, the scheduling indication value associated with the second PDCCH candidate is equal to a CIF (i.e., carrier indicator field) value.

In one embodiment, the scheduling indication value associated with the second PDCCH candidate is equal to a CIF value of a serving cell scheduled by the second PDCCH candidate.

In one embodiment, the scheduling indication value associated with the second PDCCH candidate is a value of an indication other than a CIF.

In one embodiment, the scheduling indication value associated with the second PDCCH candidate is configured independently of the CIF value.

In one embodiment, the scheduling indication value associated with the second PDCCH candidate is equal to a value configured by a field other than the field configuring the CIF value of any serving cell scheduled by the second PDCCH candidate.

In one embodiment, when a field or IE for configuring the scheduling indication value associated with the second PDCCH candidate is absent, the scheduling indication value associated with the second PDCCH candidate is equal to a default value or a predefined value.

In one embodiment, when a field or IE for configuring the scheduling indication value associated with the second PDCCH candidate is absent, the scheduling indication value associated with the second PDCCH candidate is equal to a CIF value.

In one embodiment, a scheduling indication value associated with the second PDCCH candidate is no greater than 7.

In one embodiment, a scheduling indication value associated with the second PDCCH candidate is no greater than 31.

In one embodiment, a scheduling indication value associated with the second PDCCH candidate is greater than 7.

In one embodiment, a scheduling indication value associated with the second PDCCH candidate is greater than 31.

In one embodiment, a value range of the scheduling indication value associated with the second PDCCH candidate is predefined or configurable.

In one embodiment, a value range of the scheduling indication value associated with the second PDCCH candidate is related to the protocol release.

In one embodiment, all or part of the first information block is used to explicitly or implicitly indicate the scheduling indication value associated with the second PDCCH candidate.

In one embodiment, all or part of an information block other than the first information block is used to explicitly or implicitly indicate the scheduling indication value associated with the second PDCCH candidate.

In one embodiment, the scheduling indication value associated with the second PDCCH candidate is an indication value or parameter value associated with at least one serving cell scheduled by the second PDCCH candidate.

In one embodiment, the scheduling indication value associated with the second PDCCH candidate is an indication value or parameter value associated with a serving cell set (or cell list) consisting of all serving cells scheduled by the second PDCCH candidate.

In one embodiment, the scheduling indication value associated with the second PDCCH candidate is an indication value (or parameter value) configured in a scheduling cell common to all the serving cells scheduled by the second PDCCH candidate.

In one embodiment, the scheduling indication value associated with the second PDCCH candidate is an indication value (or parameter value) configured for a serving cell set (or cell list) consisting of all serving cells scheduled by the second PDCCH candidate.

In one embodiment, the scheduling indication value associated with the second PDCCH candidate is an indication value or parameter value being used to determine a CCE subset occupied by the first PDCCH candidate in the second control resource set.

In one embodiment, the scheduling indication value associated with the second PDCCH candidate is an indication value or parameter value being used to determine all PDCCH candidates used to schedule the serving cells scheduled by the second PDCCH candidate.

In one embodiment, the scheduling indication value associated with the second PDCCH candidate is an indication value or parameter value configured together with a serving cell list scheduled by the second PDCCH candidate.

In one embodiment, the scheduling indication value associated with the second PDCCH candidate is an indication value or a parameter value configured by a field belonging to a same IE or by a sub-field belonging to a same field as the field configuring a serving cell list scheduled by the second PDCCH candidate.

In one embodiment, any serving cell scheduled by the second PDCCH candidate is configured with an indication value or a parameter value that is equal to the scheduling indication value associated with the second PDCCH candidate.

In one embodiment, the scheduling indication value associated with the second PDCCH candidate is applicable to any serving cell scheduled by the second PDCCH candidate.

In one embodiment, the scheduling indication value associated with the second PDCCH candidate is equal to an indication value or parameter value corresponding to a serving cell scheduled by the second PDCCH candidate.

In one embodiment, the scheduling indication value associated with the second PDCCH candidate is equal to a value of a sub-field of a field configuring a serving cell list scheduled by the second PDCCH candidate.

In one embodiment, the scheduling indication value associated with the second PDCCH candidate is equal to a value of a field of an IE configuring a search space set to which the second PDCCH candidate belongs.

In one embodiment, the scheduling indication value associated with the second PDCCH candidate is equal to a value of a field of an IE configuring a control resource set to which the second PDCCH candidate belongs.

In one embodiment, the scheduling indication value associated with the second PDCCH candidate is equal to a value of a field of an IE configuring a PDCCH configuration to which the second PDCCH candidate belongs.

In one embodiment, the scheduling indication value associated with the second PDCCH candidate is equal to a value of a sub-field in a DCI format field of an IE configuring a search space set to which the second PDCCH candidate belongs.

In one embodiment, the scheduling indication value associated with the second PDCCH candidate is equal to a value of a field of an IE configuring a CIF of a serving cell scheduled by the second PDCCH candidate.

In one embodiment, the value of a CIF of any serving cell scheduled by the second PDCCH candidate is equal to the scheduling indication value associated with the second PDCCH candidate.

In one embodiment, the scheduling indication value associated with the second PDCCH candidate is equal to a smallest one of CIF values of all serving cells scheduled by the second PDCCH candidate.

In one embodiment, the scheduling indication value associated with the second PDCCH candidate is equal to a greatest one of CIF values of all serving cells scheduled by the second PDCCH candidate.

In one embodiment, any serving cell scheduled by the first PDCCH candidate is a serving cell scheduled by one DCI format carried by the first PDCCH candidate, and any serving cell scheduled by the second PDCCH candidate is a serving cell scheduled by one DCI format carried by the second PDCCH candidate.

In one embodiment, any serving cell scheduled by the first PDCCH candidate is a serving cell scheduled by one DCI format carried by the first PDCCH candidate as assumed by the first node, and any serving cell scheduled by the second PDCCH candidate is a serving cell scheduled by one DCI format carried by the second PDCCH candidate as assumed by the first node.

In one embodiment, any serving cell scheduled by the first PDCCH candidate is a serving cell to which a channel or signal scheduled by one DCI format carried by the first PDCCH candidate belongs, and any serving cell scheduled by the second PDCCH candidate is a serving cell to which a channel or signal scheduled by one DCI format carried by the second PDCCH candidate belongs.

In one embodiment, the serving cells scheduled by the first PDCCH candidate are all serving cells that can be simultaneously scheduled by one DCI format carried by the first PDCCH, and the serving cells scheduled by the second PDCCH candidate are all serving cells that can be simultaneously scheduled by one DCI format carried by the second PDCCH.

In one embodiment, a serving cell scheduled by the second PDCCH candidate is the serving cell scheduled by the second PDCCH candidate when the second PDCCH candidate is present.

In one embodiment, when the number of serving cells scheduled by the first PDCCH candidate is greater than 1, any two serving cells scheduled by the first PDCCH candidate may be simultaneously scheduled by a same DCI format; when the number of serving cells scheduled by the second PDCCH candidate is greater than 1, any two serving cells scheduled by the second PDCCH candidate may be simultaneously scheduled by a same DCI format.

In one embodiment, all serving cells scheduled by the first PDCCH candidate are configured to be capable of being simultaneously scheduled by a same DCI format or by a same PDCCH.

In one embodiment, all serving cells scheduled by the first PDCCH candidate are configured by higher layer signaling to be capable of being simultaneously scheduled by a same DCI format or by a same PDCCH.

In one embodiment, all serving cells scheduled by the second PDCCH candidate are configured to be capable of being simultaneously scheduled by a same DCI format or by a same PDCCH.

In one embodiment, all serving cells scheduled by the second PDCCH candidate are configured by higher layer signaling to be capable of being simultaneously scheduled by a same DCI format or by a same PDCCH.

In one embodiment, a number of serving cells scheduled by the second PDCCH candidate is the number of serving cells scheduled by the second PDCCH candidate when the second PDCCH candidate is present.

In one embodiment, a number of serving cells scheduled by the first PDCCH candidate is a number of serving cells that can be simultaneously scheduled by one DCI format carried by the first PDCCH candidate, and a number of serving cells scheduled by the second PDCCH candidate is a number of serving cells that can be simultaneously scheduled by one DCI format carried by the second PDCCH candidate.

In one embodiment, a number of serving cells scheduled by the first PDCCH candidate is a number of serving cells that can be simultaneously scheduled by one DCI format carried by the first PDCCH candidate as assumed by the first node, and a number of serving cells scheduled by the second PDCCH candidate is a number of serving cells that can be simultaneously scheduled by one DCI format carried by the second PDCCH candidate as assumed by the first node.

In one embodiment, a number of serving cells scheduled by the first PDCCH candidate is a number of serving cells that one DCI format carried by the first PDCCH candidate is configured to be capable of simultaneously scheduling, and a number of serving cells scheduled by the second PDCCH candidate is a number of serving cells that one DCI format carried by the second PDCCH candidate is configured to be capable of simultaneously scheduling.

In one embodiment, a number of serving cells scheduled by the first PDCCH candidate is the number of all service cells configured by high layer signaling to be capable of being simultaneously scheduled by a same DCI format or a same PDCCH carried by the first PDCCH candidate, and a number of serving cells scheduled by the second PDCCH candidate is the number of all serving cells configured by high layer signaling to be capable of being simultaneously scheduled by a same DCI format or a same PDCCH carried by the second PDCCH candidate.

In one embodiment, a number of serving cells scheduled by the first PDCCH candidate is the number of all service cells configured by high layer signaling to be capable of being simultaneously scheduled by the first PDCCH candidate, and a number of serving cells scheduled by the second PDCCH candidate is the number of all serving cells configured by high layer signaling to be capable of being simultaneously scheduled by the second PDCCH candidate.

In one embodiment, a number of serving cells scheduled by the first PDCCH candidate is the number of serving cells assumed by the first node to be simultaneously scheduled by the first PDCCH candidate before decoding the DCI format carried by the first PDCCH candidate, and a number of serving cells scheduled by the second PDCCH candidate is the number of serving cells assumed by the first node to be simultaneously scheduled by the second PDCCH candidate before decoding the DCI format carried by the second PDCCH candidate.

In one embodiment, any DCI format that the first PDCCH candidate is assumed to carry is configured to schedule only one serving cell.

In one embodiment, one DCI format that the first PDCCH candidate is assumed to carry is configured to schedule multiple serving cells simultaneously.

In one embodiment, one DCI format that the first PDCCH candidate is assumed to carry is configured to schedule only one serving cell, while another DCI format that the first PDCCH candidate is assumed to carry is configured to schedule multiple serving cells simultaneously.

In one embodiment, any DCI format that the second PDCCH candidate is assumed to carry is configured to schedule only one serving cell.

In one embodiment, one DCI format that the second PDCCH candidate is assumed to carry is configured to schedule multiple serving cells simultaneously.

In one embodiment, one DCI format that the second PDCCH candidate is assumed to carry is configured to schedule only one serving cell, while another DCI format that the second PDCCH candidate is assumed to carry is configured to schedule multiple serving cells simultaneously.

In one embodiment, the number of serving cells scheduled by the first PDCCH candidate is equal to a maximum number of serving cells that all possible DCI formats assumed to be carried by the first PDCCH candidate are configured to schedule.

In one embodiment, the number of serving cells scheduled by the first PDCCH candidate is equal to a minimum number of serving cells that all possible DCI formats assumed to be carried by the first PDCCH candidate are configured to schedule.

In one embodiment, the number of serving cells scheduled by the second PDCCH candidate is equal to a maximum number of serving cells that all possible DCI formats assumed to be carried by the second PDCCH candidate are configured to schedule.

In one embodiment, the number of serving cells scheduled by the second PDCCH candidate is equal to a minimum number of serving cells that all possible DCI formats assumed to be carried by the second PDCCH candidate are configured to schedule.

In one embodiment, the number of serving cell(s) scheduled by the first PDCCH candidate is equal to 1, and the number of serving cell(s) scheduled by the second PDCCH candidate is greater than 1.

In one embodiment, the number of serving cell(s) scheduled by the first PDCCH candidate is greater than 1, and the number of serving cell(s) scheduled by the second PDCCH candidate is greater than 1.

In one embodiment, the number of serving cell(s) scheduled by the first PDCCH candidate is greater than 1, and the number of serving cell(s) scheduled by the second PDCCH candidate is equal to 1.

In one embodiment, the number of serving cell(s) scheduled by the first PDCCH candidate is greater than the number of serving cell(s) scheduled by the second PDCCH candidate.

In one embodiment, the number of serving cell(s) scheduled by the first PDCCH candidate is less than the number of serving cell(s) scheduled by the second PDCCH candidate.

In one embodiment, the number of serving cell(s) scheduled by the first PDCCH candidate is equal to the number of serving cell(s) scheduled by the second PDCCH candidate.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "only one of two conditions that an index of the second PDCCH candidate is not equal to an index of the first PDCCH candidate or that the number of the serving cell(s) scheduled by the second PDCCH candidate is not equal to the number of the serving cell(s) scheduled by the first PDCCH candidate is satisfied" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "both of two conditions that an index of the second PDCCH candidate is not equal to an index of the first PDCCH candidate or that the number of the serving cell(s) scheduled by the second PDCCH candidate is not equal to the number of the serving cell(s) scheduled by the first PDCCH candidate are satisfied" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is smaller than an index of the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is larger than an index of the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "the number of the serving cell(s) scheduled by the second PDCCH candidate is less than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "the number of the serving cell(s) scheduled by the second PDCCH candidate is greater than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is smaller than an index of the first PDCCH candidate and the number of the serving cell(s) scheduled by the second PDCCH candidate is greater than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is smaller than an index of the first PDCCH candidate and the number of the serving cell(s) scheduled by the second PDCCH candidate is less than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is larger than an index of the first PDCCH candidate and the number of the serving cell(s) scheduled by the second PDCCH candidate is greater than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is larger than an index of the first PDCCH candidate and the number of the serving cell(s) scheduled by the second PDCCH candidate is less than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is smaller than an index of the first PDCCH candidate and the number of the serving cell(s) scheduled by the second PDCCH candidate is equal to the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is larger than an index of the first PDCCH candidate and the number of the serving cell(s) scheduled by the second PDCCH candidate is equal to the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is equal to an index of the first PDCCH candidate and the number of the serving cell(s) scheduled by the second PDCCH candidate is greater than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is equal to an index of the first PDCCH candidate and the number of the serving cell(s) scheduled by the second PDCCH candidate is less than the number of the serving cell(s) scheduled by the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and an index of the second PDCCH candidate is smaller than an index of the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "the number of the serving cell(s) scheduled by the second PDCCH candidate is less than the number of the serving cell(s) scheduled by the first PDCCH candidate; or the number of the serving cell(s) scheduled by the second PDCCH candidate is equal to the number of the serving cell(s) scheduled by the first PDCCH candidate and an index of the second PDCCH candidate is smaller than an index of the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is smaller than an index of the first PDCCH candidate; or the number of the serving cell(s) scheduled by the second PDCCH candidate is greater than the number of the serving cell(s) scheduled by the first PDCCH candidate and an index of the second PDCCH candidate is equal to an index of the first PDCCH candidate" are equivalent or may be used interchangeably.

In one embodiment, statements that "at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" and that "an index of the second PDCCH candidate is smaller than an index of the first PDCCH candidate; or the number of the serving cell(s) scheduled by the second PDCCH candidate is less than the number of the serving cell(s) scheduled by the first PDCCH candidate and an index of the second PDCCH candidate is equal to an index of the first PDCCH candidate" are equivalent or may be used interchangeably.

In one embodiment, "the number of the serving cell(s) scheduled by the second PDCCH candidate is not equal to the number of the serving cell(s) scheduled by the first PDCCH candidate" includes the following meaning: a serving cell set consisting of all serving cell(s) scheduled by the second PDCCH candidate comprises any of the serving cell(s) scheduled by the first PDCCH candidate, and a serving cell set consisting of all serving cell(s) scheduled by the second PDCCH candidate also comprises a serving cell other than the serving cell(s) scheduled by the first PDCCH candidate.

In one embodiment, "the number of the serving cell(s) scheduled by the second PDCCH candidate is not equal to the number of the serving cell(s) scheduled by the first PDCCH candidate" includes the following meaning: a serving cell set consisting of all serving cell(s) scheduled by the first PDCCH candidate comprises any of the serving cell(s) scheduled by the second PDCCH candidate, and a serving cell set consisting of all serving cell(s) scheduled by the first PDCCH candidate also comprises a serving cell other than the serving cell(s) scheduled by the second PDCCH candidate.

In one embodiment, "the number of the serving cell(s) scheduled by the second PDCCH candidate is not equal to the number of the serving cell(s) scheduled by the first PDCCH candidate" includes the following meaning: at least one serving cell scheduled by the second PDCCH candidate does not belong to a serving cell set consisting of all serving cells scheduled by the first PDCCH candidate and at least one serving cell scheduled by the first PDCCH candidate does not belong to a serving cell set consisting of all serving cells scheduled by the second PDCCH candidate, but the number of serving cells in the serving cell set consisting of all serving cells scheduled by the second PDCCH candidate is greater than the number of serving cells in the serving cell set consisting of all serving cells scheduled by the first PDCCH candidate.

In one embodiment, "the number of the serving cell(s) scheduled by the second PDCCH candidate is not equal to the number of the serving cell(s) scheduled by the first PDCCH candidate" includes the following meaning: at least one serving cell scheduled by the second PDCCH candidate does not belong to a serving cell set consisting of all serving cells scheduled by the first PDCCH candidate and at least one serving cell scheduled by the first PDCCH candidate does not belong to a serving cell set consisting of all serving cells scheduled by the second PDCCH candidate, but the number of serving cells in the serving cell set consisting of all serving cells scheduled by the second PDCCH candidate is less than the number of serving cells in the serving cell set consisting of all serving cells scheduled by the first PDCCH candidate.

In one embodiment, "the number of the serving cell(s) scheduled by the second PDCCH candidate is equal to the number of the serving cell(s) scheduled by the first PDCCH candidate" includes the following meaning: a serving cell set consisting of all serving cell(s) scheduled by the second PDCCH candidate is the same as a serving cell set consisting of all serving cell(s) scheduled by the first PDCCH candidate.

In one embodiment, "the number of the serving cell(s) scheduled by the second PDCCH candidate is equal to the number of the serving cell(s) scheduled by the first PDCCH candidate" includes the following meaning: a serving cell set consisting of all serving cells scheduled by the second PDCCH candidate is not the same as a serving cell set consisting of all serving cell(s) scheduled by the first PDCCH candidate, but the number of serving cells in the serving cell set consisting of all serving cells scheduled by the second PDCCH candidate is equal to the number of serving cells in the serving cell set consisting of all serving cells scheduled by the first PDCCH candidate.

In one embodiment, a serving cell set consisting of all serving cell(s) scheduled by the first PDCCH candidate includes any one of serving cell(s) scheduled by the second PDCCH candidate.

In one embodiment, a serving cell set consisting of all serving cell(s) scheduled by the second PDCCH candidate includes any one of serving cell(s) scheduled by the first PDCCH candidate.

In one embodiment, a serving cell set consisting of all serving cell(s) scheduled by the first PDCCH candidate and a serving cell set consisting of all serving cell(s) scheduled by the second PDCCH candidate are orthogonal.

In one embodiment, there is at least one overlapping serving cell between a serving cell set consisting of all serving cells scheduled by the first PDCCH candidate and a serving cell set consisting of all serving cells scheduled by the second PDCCH candidate, at least one serving cell scheduled by the first PDCCH candidate does not belong to the serving cell set consisting of all serving cells scheduled by the second PDCCH candidate, and at least one serving cell scheduled by the second PDCCH candidate does not belong to the serving cell set consisting of all serving cells scheduled by the first PDCCH candidate.

In one embodiment, "the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied" is used to determine (or denote) the presence of the second PDCCH among the multiple PDCCH candidates.

**Embodiment 2**

Embodiment 2 illustrates a schematic diagram of a network architecture according to the present application, as shown in FIG. 2. FIG. 2 is a diagram illustrating a network architecture 200 of 5G NR, Long-Term Evolution (LTE) and Long-Term Evolution Advanced (LTE-A) systems. The 5G NR or LTE network architecture 200 may be called a 5G System/ Evolved Packet System (5GS/EPS) 200 or other suitable terminology. The 5GS/EPS 200 may comprise one or more UEs 201, an NG-RAN 202, a 5G-Core Network/Evolved Packet Core (5GC/EPC) 210, a Home Subscriber Server/ Unified Data Management(HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The NG-RAN 202 comprises an NR/evolved node B (gNB/eNB) 203 and other gNB(eNB) 204. The gNB(eNB) 203 provides UE 201 oriented user plane and control plane terminations. The gNB(eNB)203 can be connected to other gNB(eNB) 204 via an Xn/X2 interface (like backhaul). The gNB(eNB)203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB(eNB)203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB(eNB)203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the gNB(eNB) 203 corresponds to the second node in the present application.

## Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 used for a first node (UE or gNB) and a second node (gNB or UE) is represented by three layers, which are layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first node and a second node via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second nodes. The PDCP sublayer 304 provides multiplexing among variable radio bearers and logical channels. The PDCP sublayer 304 provides security by encrypting packets and also support for inter-cell handover of the first node between second nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information block in the present application is generated by the RRC306, or the MAC302, or the MAC352, or by the PHY301, or the PHY351.

In one embodiment, the second information block in the present application is generated by the RRC306, or the MAC302, or the MAC352, or by the PHY301, or the PHY351.

In one embodiment, the third information block in the present application is generated by the RRC306, or the MAC302, or the MAC352, or by the PHY301, or the PHY351.

## Embodiment 4

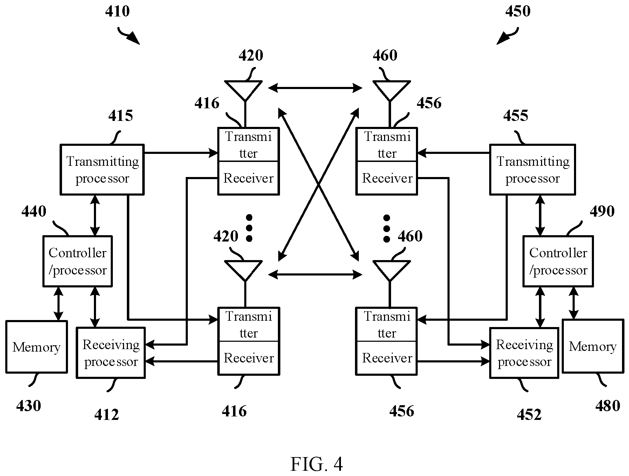

Embodiment 4 illustrates a schematic diagram of a first node and a second node according to one embodiment of the present application, as shown in FIG. 4.

The first node (450) can comprise a controller/processor 490, a data source/buffer 480, a receiving processor 452, a transmitter/receiver 456 and a transmitting processor 455, where the transmitter/receiver 456 comprises an antenna 460.

The second node (410) can comprise a controller/processor 440, a data source/buffer 430, a receiving processor 412, a transmitter/receiver 416 and a transmitting processor 415, where the transmitter/receiver 416 comprises an antenna 420.

In Downlink (DL), a higher layer packet, for instance higher-layer information contained in the first information block and the second information block in the present application is provided to the controller/processor 440. The controller/processor 440 provides functions of the L2 layer and above. In DL, the controller/processor 440 provides header compression, encryption, packet segmentation and reordering, multiplexing between a logical channel and a transport channel as well as radio resources allocation for the first node 450 based on various priorities. The controller/processor 440 is also responsible for HARQ operation, a retransmission of a lost packet and a signaling to the first node 450, for instance, higher-layer information contained in the first information block and the second information block is generated in the controller/processor 440. The transmitting processor 415 performs various signal processing functions used for the L1 (that is, PHY), including coding, interleaving, scrambling, modulating, power control/allocating, pre-coding and physical layer control signaling generation, for example, the generations of a physical-layer signal of the first information block and the second information block in the present application and a physical-layer signal corresponding to the PDCCH candidates in the present application are completed in the transmitting processor 415. Modulation symbols that have been generated are divided into parallel streams and each of them is mapped onto a corresponding multicarrier subcarrier and/or multicarrier symbol, and then is mapped by the transmitting processor 415 to the antenna 420 via the transmitter 416 to be transmitted in the form of radio frequency signals. At the receiving end, each receiver 456 receives a radio frequency signal via a corresponding antenna 460, and recovers baseband information modulated onto a radio frequency carrier and provides the baseband information to the receiving processor 452. The receiving processor 452 performs various signal receiving processing functions used for the L1. Signal receiving processing functions include monitoring of a physical layer signal of the first information block and the second information block in the present application and PDCCH candidates, demodulating multicarrier symbols in multicarrier symbol streams based on various modulation schemes (i.e., BPSK, QPSK), then de-scrambling, decoding and de-interleaving to recover data or control signal transmitted by the second node 410 on a physical channel, and providing the data and control signal to the controller/processor 490. The controller/processor 490 is in charge of the L2 and above layers, the controller/processor 490 interprets higher-layer information comprised in the first information block and the second information block in the present application. The controller/processor can be associated with the memory 480 that stores program code and data; the memory 480 may be called a computer readable medium.

In UL transmission, which is similar to DL, higher-layer information, including that contained in the third information block in the present application, upon generation in the controller/processor 490, is through the transmitting processor 455 to perform signal transmitting processing functions used for the L1 (that is, PHY), for instance, generation of physical layer signals carrying the third information block is completed in the transmitting processor 455, and are then mapped to the antenna 460 via the transmitter 456 from the transmitting processor 455 and transmitted in the form of radio frequency signals. The receiver 416 receives a radio frequency signal via a corresponding antenna 420, and each receiver 416 recovers baseband information modulated onto a radio frequency carrier and provides the baseband information to the receiving processor 412. The receiving processor 412 performs various signal reception processing functions used for L1 (i.e., PHY), including receiving a physical layer signal carrying the third information block and then providing data and/or control signal to the controller/processor 440. Functions of the L2 performed by the controller/processor 440 include interpreting higher-layer information, including interpreting higher-layer information carried in the third information block. The controller/processor can be associated with the buffer 430 that stores program code and data; the buffer 430 may be called a computer readable medium.

In one embodiment, the first node 450 comprises at least one processor and at least one memory. The at least one memory comprises computer program codes; the at least one memory and the computer program codes are configured to be used in collaboration with the at least one processor. The first node 450 at least receives a first information block, the first information block being used to determine multiple PDCCH candidates, any one of the multiple PDCCH candidates occupying at least one CCE; and monitors at least one PDCCH candidate; a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, the first node 450 comprises a memory that stores a computer readable instruction program. The computer readable instruction program generates actions when executed by at least one processor. The actions include: receiving a first information block, the first information block being used to determine multiple PDCCH candidates, any one of the multiple PDCCH candidates occupying at least one CCE; and monitoring at least one PDCCH candidate; a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, the second node 410 comprises at least one processor and at least one memory. The at least one memory comprises computer program codes; the at least one memory and the computer program codes are configured to be used in collaboration with the at least one processor. The second node 410 at least transmits a first information block, the first information block being used to determine multiple PDCCH candidates, any one of the multiple PDCCH candidates occupying at least one CCE; and determines at least one PDCCH candidate; herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, the second node 410 comprises a memory that stores a computer readable instruction program. The computer readable instruction program generates actions when executed by at least one processor. The actions include: transmitting a first information block, the first information block being used to determine multiple PDCCH candidates, any one of the multiple PDCCH candidates occupying at least one CCE; and determining at least one PDCCH candidate; herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, the first node 450 is a UE.

In one embodiment, the second node 410 is a base station (gNB/eNB).

In one embodiment, the receiver 456 (comprising the antenna 460), the receiving processor 452 and the controller/processor 490 are used for receiving the first information block in the present application.

In one embodiment, the receiver 456 (comprising the antenna 460), the receiving processor 452 and the controller/processor 490 are used for receiving the second information block in the present application.

In one embodiment, the receiver 456 (comprising the antenna 460), the receiving processor 452 and the controller/processor 490 are used for monitoring at least one PDCCH candidate in the present application.

In one embodiment, the transmitter 456 (comprising the antenna 460), the transmitting processor 455 and the controller/processor 490 are used for transmitting the third information block in the present application.

In one embodiment, the transmitter 416 (comprising the antenna 420), the transmitting processor 415 and the controller/processor 440 are used for transmitting the first information block in the present application.

In one embodiment, the transmitter 416 (comprising the antenna 420), the transmitting processor 415 and the controller/processor 440 are used for transmitting the second information block in the present application.

In one embodiment, the transmitter 416 (comprising the antenna 420), the transmitting processor 415 and the controller/processor 440 are used for determining at least one PDCCH candidate in the present application.

In one embodiment, the receiver 416 (comprising the antenna 420), the receiving processor 412 and the controller/processor 440 are used for receiving the third information block in the present application.

### Embodiment 5

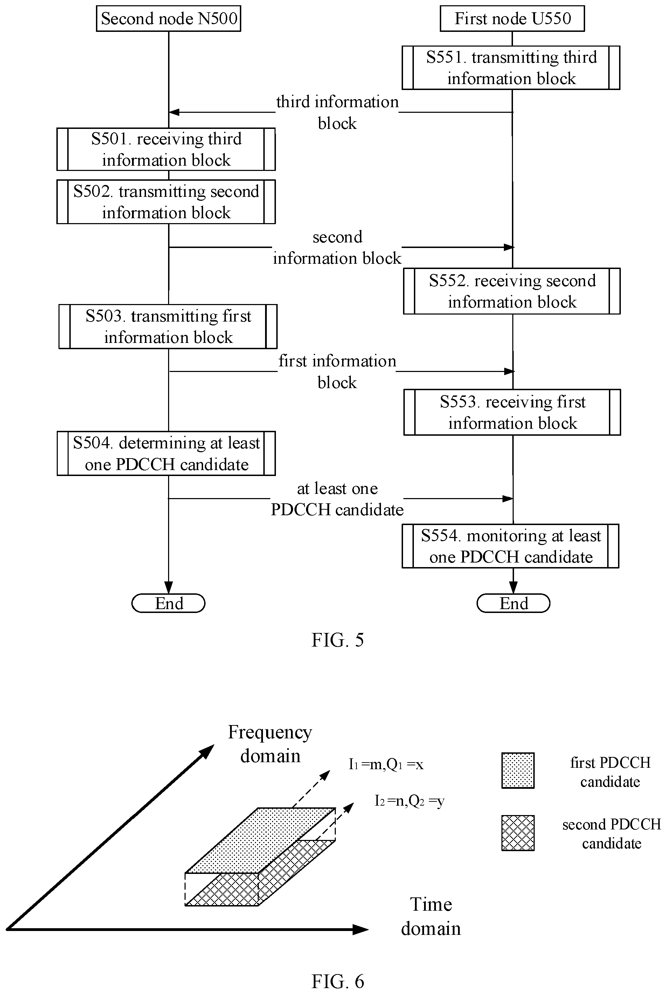

Embodiment 5 illustrates a flowchart of radio signal transmission according to one embodiment of the present application, as shown in FIG. 5. In FIG. 5, a second node N500 is a maintenance base station for a serving cell for a first node U550. It should be particularly noted that the sequence illustrated herein does not set any limit to the signal transmission order or implementation order in the present application.

The **second node N500** receives a third information block in step S501, transmits a second information block in step S502, transmits a first information block in step S503, and determines at least one PDCCH candidate in step S504.

The **first node U550** transmits the third information block in step S551, receives the second information block in step S552, receives the first information block in step S553, and monitors the at least one PDCCH candidate in step S554.

In Embodiment 5, the first information block is used to determine multiple PDCCH (Physical Downlink Control Chanel) candidates, any one of the multiple PDCCH candidates occupying at least one CCE (Control Channel Element); a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied; the second information block is used to determine a first cell group, the first cell group including multiple serving cells; the third information block is used to indicate a capability parameter set of a transmitter of the third information block, the capability parameter set of the transmitter of the third information block including a first parameter and a second parameter; the first parameter is used to indicate whether a transmitter of the third information block supports a number of downlink serving cells scheduled by a same PDCCH being greater than 1, while the second parameter is used to indicate whether the transmitter of the third information block supports a number of uplink serving cells scheduled by a same PDCCH being greater than 1.

In one embodiment, the second information block is transmitted via an air interface or a wireless interface.

In one embodiment, the second information block is transmitted via a higher layer signaling or a physical layer signaling.

In one embodiment, the second information block comprises all or part of a higher layer signaling or a physical layer signaling.

In one embodiment, the second information block comprises all or part of a Radio Resource Control (RRC) signaling.

In one embodiment, the second information block comprises all or part of a Medium Access Control (MAC) layer signaling.

In one embodiment, the second information block comprises all or part of a System Information Block (SIB).

In one embodiment, the second information block is transmitted through a Physical Downlink Shared Channel (PDSCH).

In one embodiment, the second information block is UE-specific.

In one embodiment, the second information block comprises an IE "CellGroupConfig".

In one embodiment, the second information block comprises a field "sCellToAddModList".

In one embodiment, the second information block comprises a field "sCellToReleaseList".

In one embodiment, the second information block comprises a field "secondaryCellGroup".

In one embodiment, the second information block comprises a field "masterCellGroup".

In one embodiment, the second information block is configured Per Serving Cell group.

In one embodiment, the second information block comprises all or partial fields in a Downlink Control Information (DCI) format.

In one embodiment, the second information block comprises an IE "CrossCarrierSchedulingConfig".

In one embodiment, the second information block comprises an IE "ServingCellConfig".

In one embodiment, the first information block and the second information block are two different fields in a same IE.

In one embodiment, the first information block and the second information block are two sub-fields of a same field.

In one embodiment, the first information block and the second information block respectively belong to two different IEs.

In one embodiment, the first information block is earlier than the second information block.

In one embodiment, the first information block is later than the second information block.

In one embodiment, the first information block and the second information block are transmitted through a same physical channel.

In one embodiment, the statement that "the second information block is used to determine a first cell group" includes the following meaning: the second information block is used by the first node in the present application to determine the first cell group.

In one embodiment, the statement that "the second information block is used to determine a first cell group" includes the following meaning: all or part included in the second information block is used to explicitly or implicitly indicate serving cells included in the first cell group.

In one embodiment, the statement that "the second information block is used to determine a first cell group" includes the following meaning: all or part included in the second information block is used to explicitly or implicitly indicate an index of a secondary cell (SCell) included in the first cell group.

In one embodiment, the statement that "the second information block is used to determine a first cell group" includes the following meaning: all or part included in the second information block is used to explicitly or implicitly indicate the scheduling cell of at least one serving cell included in the first cell group, the first cell group being composed of serving cells having the same scheduling cell.

In one embodiment, the statement that "the second information block is used to determine a first cell group" includes the following meaning: all or part included in the second information block is used to explicitly or implicitly indicate configuration information for cross carrier scheduling (CCS) of at least one serving cell included in the first cell group.

In one embodiment, the third information block is transmitted via an air interface or a wireless interface.

In one embodiment, the third information block comprises all or part of a higher layer signaling or a physical layer signaling.

In one embodiment, the third information block is earlier than the first information block.

In one embodiment, the third information block is later than the first information block.

In one embodiment, the third information block is earlier than the second information block.

In one embodiment, the third information block is later than the second information block.

In one embodiment, the third information block comprises all or part of a Radio Resource Control (RRC) signaling.

In one embodiment, the third information block comprises all or part of a Medium Access Control (MAC) layer signaling.

In one embodiment, the third information block is transmitted through a Physical Uplink Shared Channel (PUSCH).

In one embodiment, the third information block is transmitted through a Physical Uplink Control Channel (PUCCH).

In one embodiment, the third information block is used to indicate capabilities of the first node in the present application.

In one embodiment, the statement in the claims that "the third information block is used to indicate a capability parameter set of a transmitter of the third information block" includes the following meaning: the third information block is used by the first node in the present application to indicate the capability parameter set of the first node.

In one embodiment, the statement in the claims that "the third information block is used to indicate a capability parameter set of a transmitter of the third information block" includes the following meaning: all or part of the third information block is used to explicitly or implicitly indicate the capability parameter set of the transmitter of the third information block.

In one embodiment, the third information block comprises an IE "Phy-ParametersFRX-Diff"

In one embodiment, the third information block comprises an IE "UE-NR-Capability".

In one embodiment, the third information block comprises a field "pdcch-MonitoringCA".

In one embodiment, the third information block comprises a field "pdcch-BlindDetectionCA".

In one embodiment, the third information block comprises a field "CA-ParametersNR".

In one embodiment, the third information block comprises a field "Phy-Parameters".

In one embodiment, a capability parameter set of the transmitter of the third information block only comprises the first parameter and the second parameter.

In one embodiment, a capability parameter set of the transmitter of the third information block also comprises a parameter other than the first parameter and the second parameter.

In one embodiment, a capability parameter set of the transmitter of the third information block comprises a parameter in an IE "Phy-ParametersFRX-Diff".

In one embodiment, a capability parameter set of the transmitter of the third information block comprises a parameter in a field "pdcch-MonitoringCA".

In one embodiment, a capability parameter set of the transmitter of the third information block comprises a parameter in a field "pdcch-BlindDetectionCA".

In one embodiment, a capability parameter set of the transmitter of the third information block comprises a parameter in a field "CA-ParametersNR".

In one embodiment, a capability parameter set of the transmitter of the third information block comprises a parameter in a field "Phy-Parameters".

**Embodiment 6**

Embodiment 6 illustrates a schematic diagram of a relationship between a first PDCCH candidate and a second PDCCH candidate according to one embodiment of the present application, as shown in FIG. 6. In FIG. 6, the dot-filled portion represents the first PDCCH candidate, and the cross-filled portion represents the second PDCCH candidate, $I_1$ and $I_2$ represent indexes of the first PDCCH candidate and the second PDCCH candidate, respectively, and $Q_i$ and $Q_2$ represent the numbers of serving cells scheduled by the first PDCCH candidate and the second PDCCH candidate, respectively.

In Embodiment 6, the number of the serving cell(s) scheduled by the second PDCCH candidate of the present application is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate.

In one embodiment, "the number of the serving cell(s) scheduled by the second PDCCH candidate is greater than the number of the serving cell(s) scheduled by the first PDCCH candidate" includes the following meaning: a serving cell set consisting of all serving cell(s) scheduled by the second PDCCH candidate comprises any of the serving cell(s) scheduled by the first PDCCH candidate, and a serving cell set consisting of all serving cell(s) scheduled by the second PDCCH candidate also comprises a serving cell other than the serving cell(s) scheduled by the first PDCCH candidate.

In one embodiment, statements that "the number of the serving cell(s) scheduled by the second PDCCH candidate is greater than the number of the serving cell(s) scheduled by the first PDCCH candidate" and that "a serving cell set consisting of all serving cell(s) scheduled by the first PDCCH candidate is a subset of a serving cell set consisting of all serving cells scheduled by the second PDCCH candidate, and the serving cell set consisting of all serving cells scheduled by the second PDCCH candidate also comprises at least one serving cell not being scheduled by the first PDCCH candidate" are equivalent or may be used interchangeably.

In one embodiment, "the number of the serving cell(s) scheduled by the second PDCCH candidate is not equal to the number of the serving cell(s) scheduled by the first PDCCH candidate" includes the following meaning: at least one serving cell scheduled by the second PDCCH candidate does not belong to a serving cell set consisting of all serving cells scheduled by the first PDCCH candidate and at least one serving cell scheduled by the first PDCCH candidate does not belong to a serving cell set consisting of all serving cells scheduled by the second PDCCH candidate, but the number of serving cells in the serving cell set consisting of all serving cells scheduled by the second PDCCH candidate is greater than the number of serving cells in the serving cell set consisting of all serving cells scheduled by the first PDCCH candidate.

In one embodiment, an index of the first PDCCH candidate is an index of the first PDCCH candidate in a search space set to which the first PDCCH candidate belongs, and an index of the second PDCCH candidate is an index of the second PDCCH candidate in a search space set to which the second PDCCH candidate belongs.

In one embodiment, an index of the first PDCCH candidate is an index of a search space set to which the first PDCCH candidate belongs, and an index of the second PDCCH candidate is an index of a search space set to which the second PDCCH candidate belongs.

In one embodiment, an index of the first PDCCH candidate is an index of a control resource set to which the first PDCCH candidate belongs, and an index of the second PDCCH candidate is an index of a control resource set to which the second PDCCH candidate belongs.

In one embodiment, an index of the first PDCCH candidate is an index of a CORESET pool to which the first PDCCH candidate belongs, and an index of the second PDCCH candidate is an index of a CORESET pool to which the second PDCCH candidate belongs.

In one embodiment, an index of the first PDCCH candidate is an index of a serving cell scheduled by the first PDCCH candidate, and an index of the second PDCCH candidate is an index of a serving cell scheduled by the second PDCCH candidate.

In one embodiment, an index of the first PDCCH candidate is an index of a serving cell with the smallest index value among all serving cells scheduled by the first PDCCH candidate, and an index of the second PDCCH candidate is an index of a serving cell with the smallest index value among all serving cells scheduled by the second PDCCH candidate.

In one embodiment, an index of the first PDCCH candidate is an index of a serving cell with the greatest index value among all serving cells scheduled by the first PDCCH candidate, and an index of the second PDCCH candidate is an index of a serving cell with the greatest index value among all serving cells scheduled by the second PDCCH candidate.

In one embodiment, "the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate" includes the following meaning: that the number of the serving cell(s) scheduled by the second PDCCH candidate is greater than the number of the serving cell(s) scheduled by the first PDCCH candidate denotes that the second PDCCH candidate exists among the multiple PDCCH candidates.

In one embodiment, "the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate" includes the following meaning: that the number of the serving cell(s) scheduled by the second PDCCH candidate is equal to the number of the serving cell(s) scheduled by the first PDCCH candidate and the index of the second PDCCH candidate is smaller than the index of the first PDCCH candidate denotes that the second PDCCH candidate exists among the multiple PDCCH candidates.

## Embodiment 7

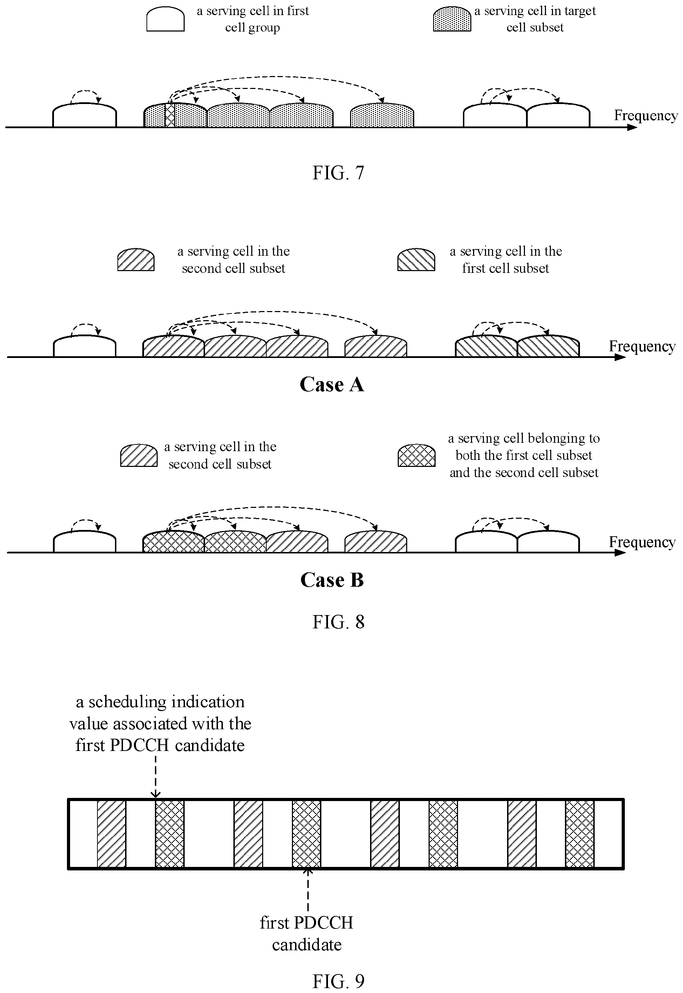

Embodiment 7 illustrates a schematic diagram of a target cell subset according to one embodiment of the present application, as shown in FIG. 7. In FIG. 7, the horizontal axis represents frequency; each arc-top region represents a serving cell in the first cell group, each dot-filled arc-top region represents a serving cell in a target cell subset, the cross-line-filled region represents a second PDCCH candidate, and the dotted lines with arrow represent the relationship of scheduling and being scheduled.

In Embodiment 7, the second information block of the present application is used to determine a first cell group, the first cell group comprising multiple serving cells; each serving cell in the first cell group corresponds to a scheduling indication value, and a target cell subset comprises serving cells in the first cell group that correspond to a same equal scheduling indication value and are scheduled by a target scheduling cell; the second PDCCH candidate of the present application belongs to the target scheduling cell, the equal scheduling indication value corresponding to the serving cells in the target cell subset being used to determine a scheduling indication value associated with the second PDCCH candidate; at least one of a number of bits included in at least one field included in a DCI format carried by the second PDCCH candidate or a number of fields included in the DCI format carried by the second PDCCH candidate is related to a number of serving cells included in the target cell subset.

In one embodiment, the first cell group is a Master Cell Group (MCG).

In one embodiment, the first cell group is a Secondary Cell Group (SCG).

In one embodiment, the first cell group comprises both serving cells in the Master Cell Group (MCG) and serving cells in the Secondary Cell Group (SCG).

In one embodiment, the first cell group comprises a Special Cell (SpCell).

In one embodiment, the first cell group comprises no Special Cell (SpCell).

In one embodiment, any two serving cells included in the first cell group have a same scheduling cell.

In one embodiment, the first cell group is composed of serving cells having the same scheduling cell.

In one embodiment, any serving cell included in the first cell group is an Activated Cell.

In one embodiment, the first cell group includes a serving cell which is a Deactivated Cell.

In one embodiment, the scheduling indication value corresponding to any serving cell included in the first cell group is equal to a value of a CIF of a corresponding serving cell.

In one embodiment, the scheduling indication value corresponding to any serving cell included in the first cell group is equal to a value of an indication independent of the CIF.

In one embodiment, the scheduling indication value corresponding to one serving cell included in the first cell group is respectively equal to a value of an indication other than a CIF of a corresponding serving cell, and a scheduling indication value corresponding to another serving cell included in the first cell group is equal to a value of a CIF of the corresponding serving cell.

In one embodiment, the scheduling indication value corresponding to any serving cell included in the first cell group is a configured value independent of a CIF of a corresponding serving cell.

In one embodiment, the scheduling indication value corresponding to any serving cell included in the first cell group is equal to a value configured by a field other than the field configuring a CIF value of a corresponding serving cell.

In one embodiment, there exists one serving cell in the first cell group corresponding to a scheduling indication value that is equal to a default value or a predefined value.

In one embodiment, there exists one serving cell in the first cell group corresponding to a scheduling indication value that is equal to 0.

In one embodiment, there exists at least one serving cell in the first cell group corresponding to (a) scheduling indication value(s) being signaling configured.

In one embodiment, any serving cell included in the first cell group corresponds to a scheduling indication value that is greater than 0.

In one embodiment, the first cell group includes two serving cells respectively corresponding to scheduling indication values that are not equal.

In one embodiment, the first cell group includes two serving cells respectively corresponding to scheduling indication values that are equal.

In one embodiment, the second information block is used to explicitly or implicitly indicate at least one scheduling indication value corresponding to at least one serving cell included in the first cell group.

In one embodiment, the first information block is used to explicitly or implicitly indicate at least one scheduling indication value corresponding to at least one serving cell included in the first cell group.

In one embodiment, the at least one scheduling indication value corresponding to each of the at least one serving cell included in the first cell group is configured explicitly or implicitly by an IE configuring a CIF value of a corresponding serving cell.

In one embodiment, the at least one scheduling indication value corresponding to each of the at least one serving cell included in the first cell group is configured explicitly or implicitly by an IE other than the IE configuring a CIF value of a corresponding serving cell.

In one embodiment, the at least one scheduling indication value corresponding to each of the at least one serving cell included in the first cell group is configured explicitly or implicitly by an IE configuring a corresponding serving cell.

In one embodiment, when a field or IE of the scheduling indication value corresponding to one serving cell included in the first cell group is absent, the scheduling indication value corresponding to this serving cell is equal to a default value or a predefined value.

In one embodiment, when a field or IE of the scheduling indication value corresponding to one serving cell included in the first cell group is absent, the scheduling indication value corresponding to this serving cell is equal to a CIF value of this serving cell.

In one embodiment, any serving cell included in the first cell group corresponds to a scheduling indication value that is a non-negative integer no greater than 7.

In one embodiment, any serving cell included in the first cell group corresponds to a scheduling indication value that is no greater than 31.

In one embodiment, any serving cell included in the first cell group corresponds to a scheduling indication value that is greater than 7.

In one embodiment, a serving cell included in the first cell group corresponds to a scheduling indication value that is greater than 31.

In one embodiment, any serving cell included in the first cell group corresponds to a scheduling indication value that is greater than 31.

In one embodiment, any serving cell included in the first cell group corresponds to a scheduling indication value with a pre-defined or configured value range.

In one embodiment, any serving cell included in the first cell group corresponds to a scheduling indication value with a value range relating to the protocol release.

In one embodiment, the correspondence between a serving cell included in the first cell group and a corresponding scheduling indication value is configurable or predefined.

In one embodiment, a scheduling indication value corresponding to a serving cell included in the first cell group is an indication value applicable for this serving cell.

In one embodiment, a scheduling indication value corresponding to a serving cell included in the first cell group is an indication value indicating an applicable grant or assignment for this serving cell.

In one embodiment, a scheduling indication value corresponding to a serving cell included in the first cell group is an indication value for determining the distribution or location of a PDCCH candidate for scheduling this serving cell in a search space set to which it belongs.

In one embodiment, a scheduling indication value corresponding to a serving cell included in the first cell group is an indication value configured for this serving cell.

In one embodiment, a scheduling indication value corresponding to a serving cell included in the first cell group is an indication value associated to this serving cell.

In one embodiment, a scheduling indication value corresponding to any serving cell included in the first cell group is used in the scheduling cell of this serving cell.

In one embodiment, a value range of a scheduling indication value corresponding to a serving cell included in the first cell group is used to determine whether the corresponding serving cell is scheduled together with other serving cells.

In one embodiment, the statements that "a target cell subset comprises serving cells in the first cell group that correspond to a same equal scheduling indication value and are scheduled by a target scheduling cell" and that "any two serving cells included in the target cell subset correspond to a same equal scheduling indication value and are scheduled by the target scheduling cell" are equivalent or may be used interchangeably.

In one embodiment, the statements that "a target cell subset comprises serving cells in the first cell group that correspond to a same equal scheduling indication value and are scheduled by a target scheduling cell" and that "the target cell subset consists of serving cells that correspond to a same equal scheduling indication value and are scheduled by the target scheduling cell" are equivalent or may be used interchangeably.

In one embodiment, the statements that "a target cell subset comprises serving cells in the first cell group that correspond to a same equal scheduling indication value and are scheduled by a target scheduling cell" and that "the target cell subset comprises all serving cells that correspond to a same equal scheduling indication value and are scheduled by the target scheduling cell" are equivalent or may be used interchangeably.

In one embodiment, the statements that "a target cell subset comprises serving cells in the first cell group that correspond to a same equal scheduling indication value and are scheduled by a target scheduling cell" and that "the target cell subset comprises all serving cells that correspond to a same equal scheduling indication value and are scheduled by the target scheduling cell and the target scheduling cell" are equivalent or may be used interchangeably.

In one embodiment, the statements that "a target cell subset comprises serving cells in the first cell group that correspond to a same equal scheduling indication value and are scheduled by a target scheduling cell" and that "the target cell subset consists of serving cells that correspond to a same equal scheduling indication value and are scheduled by the target scheduling cell and the target scheduling cell" are equivalent or may be used interchangeably.

In one embodiment, the statements that "a target cell subset comprises serving cells in the first cell group that correspond to a same equal scheduling indication value and are scheduled by a target scheduling cell" and that "serving cells in the first cell group are divided into subsets according to corresponding scheduling indication values and scheduling cells, the target cell subset being one of the divided subsets" are equivalent or may be used interchangeably.

In one embodiment, the statements that "a target cell subset comprises serving cells in the first cell group that correspond to a same equal scheduling indication value and are scheduled by a target scheduling cell" and that "serving cells in the first cell group are divided into multiple cell subsets, where the serving cells respectively belonging to two cell subsets of the multiple cell subsets are either scheduled by different serving cells or corresponding to unequal scheduling indication values, and all the serving cells belonging to one same cell subset of the multiple cell subsets have a same scheduling cell and correspond to a same equal scheduling indication value, the target cell subset being one of the multiple cell subsets" are equivalent or may be used interchangeably.

In one embodiment, a scheduling cell of a serving cell is a serving cell that carries scheduling information for a channel or signal on this serving cell.

In one embodiment, a scheduling cell of a serving cell is a serving cell to which the grant or assignment carrying this serving cell belongs.

In one embodiment, a scheduling cell of a serving cell is a serving cell to which a PDCCH scheduling a channel or signal on this serving cell belongs.

In one embodiment, when self-scheduling is used, a scheduling cell of a serving cell is this serving cell itself; when cross-carrier scheduling is used, the scheduling cell of a serving cell is a serving cell other than this serving cell.

In one embodiment, the target scheduling cell is a Primary Cell (Pcell).

In one embodiment, the target scheduling cell is a Secondary Cell (Scell).

In one embodiment, the target scheduling cell is a Special Cell.

In one embodiment, the target scheduling cell belongs to the first cell group.

In one embodiment, the target scheduling cell is a serving cell outside of the first cell group.

In one embodiment, the first information block is used to determine the target scheduling cell.

In one embodiment, the second information block is used to determine the target scheduling cell.

In one embodiment, an information block other than the first information block is used to determine the target scheduling cell.

In one embodiment, the first information block is used to determine that the target scheduling cell is a scheduling cell of at least one serving cell included in the first cell group.

In one embodiment, an information block other than the first information block is used to determine that the target scheduling cell is a scheduling cell of at least one serving cell included in the first cell group.

In one embodiment, the target scheduling cell is a scheduling cell of at least one serving cell included in the first cell group.

In one embodiment, the target cell being a special cell is used to determine that the target scheduling cell is a scheduling cell of at least one serving cell included in the first cell group.

In one embodiment, the target scheduling cell is a scheduling cell common to multiple serving cells included in the first cell group.

In one embodiment, the target scheduling cell is a scheduling cell of only one serving cell in the first cell group.

In one embodiment, "the second PDCCH candidate belongs to the target scheduling cell" includes the following meaning: time-frequency resources occupied by the second PDCCH candidate belong to the target scheduling cell.

In one embodiment, "the second PDCCH candidate belongs to the target scheduling cell" includes the following meaning: frequency-domain resources occupied by the second PDCCH candidate belong to a carrier corresponding to the target scheduling cell.

In one embodiment, "the second PDCCH candidate belongs to the target scheduling cell" includes the following meaning: a Bandwidth Part (BWP) of which the frequency-domain resources occupied by the second PDCCH candidate are a part belongs to the target scheduling cell.

In one embodiment, "the second PDCCH candidate belongs to the target scheduling cell" includes the following meaning: a Control Resource Set (CORESET) of which the second PDCCH candidate is a part belongs to the target scheduling cell.

In one embodiment, "the second PDCCH candidate belongs to the target scheduling cell" includes the following meaning: a search space set of which the second PDCCH candidate is a part belongs to the target scheduling cell.

In one embodiment, "the second PDCCH candidate belongs to the target scheduling cell" includes the following meaning: a CORESET and a search space set to which the second PDCCH candidate belongs both belong to the target scheduling cell.

In one embodiment, "the second PDCCH candidate belongs to the target scheduling cell" includes the following meaning: a CORESET and a search space set to which the second PDCCH candidate belongs are both BWP configurations for the target scheduling cell.

In one embodiment, "the second PDCCH candidate belongs to the target scheduling cell" includes the following meaning: configuration information for the target scheduling cell includes configurations for a CORESET and a search space set to which the second PDCCH candidate belongs.

In one embodiment, "the second PDCCH candidate belongs to the target scheduling cell" includes the following meaning: configuration information for the target scheduling cell includes configuration for a PDCCH carried by the second PDCCH candidate.

In one embodiment, "the second PDCCH candidate belongs to the target scheduling cell" includes the following meaning: configuration information for the target scheduling cell includes configuration for a BWP of which the PDCCH carried by the second PDCCH candidate is a part.

In one embodiment, "the equal scheduling indication value corresponding to the serving cells in the target cell subset being used to determine a scheduling indication value associated with the second PDCCH candidate" includes the following meaning: the equal scheduling indication value corresponding to the serving cells in the target cell subset are used by the first node of the present application to determine the scheduling indication value associated with the second PDCCH candidate.

In one embodiment, "the equal scheduling indication value corresponding to the serving cells in the target cell subset being used to determine a scheduling indication value associated with the second PDCCH candidate" includes the following meaning: the scheduling indication value associated with the second PDCCH candidate is equal to the equal scheduling indication value corresponding to the serving cells in the target cell subset.

In one embodiment, "the equal scheduling indication value corresponding to the serving cells in the target cell subset being used to determine a scheduling indication value associated with the second PDCCH candidate" includes the following meaning: the scheduling indication value associated with the second PDCCH candidate is linear with the equal scheduling indication value corresponding to the serving cells in the target cell subset.

In one embodiment, "the equal scheduling indication value corresponding to the serving cells in the target cell subset being used to determine a scheduling indication value associated with the second PDCCH candidate" includes the following meaning: the scheduling indication value associated with the second PDCCH candidate is equal to the sum of the equal scheduling indication value corresponding to the serving cells in the target cell subset and a pre-defined or configured offset value.

In one embodiment, "the equal scheduling indication value corresponding to the serving cells in the target cell subset being used to determine a scheduling indication value associated with the second PDCCH candidate" includes the following meaning: the scheduling indication value associated with the second PDCCH candidate is equal to the difference between the equal scheduling indication value corresponding to the serving cells in the target cell subset and a pre-defined or configured offset value.

In one embodiment, "the equal scheduling indication value corresponding to the serving cells in the target cell subset being used to determine a scheduling indication value associated with the second PDCCH candidate" includes the following meaning: the scheduling indication value associated with the second PDCCH candidate is linear with the product of the equal scheduling indication value corresponding to the serving cells in the target cell subset and a pre-defined or configured scaling factor.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: the number of bits of at least one field included in the DCI format carried by the second PDCCH candidate is related to the number of serving cells included in the target cell subset.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: the number of fields included in the DCI format carried by the second PDCCH candidate is related to the number of serving cells included in the target cell subset.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: both the number of bits of at least one field included in the DCI format carried by the second PDCCH candidate and the number of fields included in the DCI format carried by the second PDCCH candidate are related to the number of serving cells included in the target cell subset.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: at least one of the number of bits of at least one field included in the DCI format carried by the second PDCCH candidate or the number of fields included in the DCI format carried by the second PDCCH candidate is linear with the number of serving cells included in the target cell subset.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: the number of serving cells included in the target cell subset is used to determine, according to a conditional relationship or a mapping rule, at least one of the number of bits of at least one field included in the DCI format carried by the second PDCCH candidate or the number of fields included in the DCI format carried by the second PDCCH candidate.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: the number of serving cells included in the target cell subset is used to calculate at least one of the number of bits of at least one field included in the DCI format carried by the second PDCCH candidate or the number of fields included in the DCI format carried by the second PDCCH candidate.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: the number of bits of at least one field included in the DCI format carried by the second PDCCH candidate is linear with a value obtained by rounding up the logarithm of the number of serving cells included in the target cell subset, with base of 2, to a nearest integer.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: the number of fields included in the DCI format carried by the second PDCCH candidate is linear with a value obtained by rounding up the logarithm of the number of serving cells included in the target cell subset, with base of 2, to a nearest integer.

In one embodiment, the statement that "at least one of a number of bits included in at least one field included in a DCI format carried by the second PDCCH candidate or a number of fields included in the DCI format carried by the second PDCCH candidate is related to a number of serving cells included in the target cell subset" includes the following meaning: the number of bits of at least one field included in the DCI format carried by the second PDCCH candidate is linear with a value obtained by rounding up the logarithm of the number of serving cells included in the target cell subset, with base of 2, to a nearest integer, besides, the number of fields included in the DCI format carried by the second PDCCH candidate is linear with a value obtained by rounding up the logarithm of the number of serving cells included in the target cell subset, with base of 2, to a nearest integer.

In one embodiment, a number of bits of a field included in the DCI format carried by the second PDCCH candidate is equal to a bit width of the field.

In one embodiment, at least one of a number of bits comprised by a New Data Indicator (NDI) field, a number of bits comprised by a HARQ process number field or a number of bits comprised by a Modulation and coding scheme (MCS) field included in the DCI format carried by the second PDCCH candidate is related to the number of serving cells included in the target cell subset.

In one embodiment, a number of bits included in at least one field of a Frequency domain resource assignment field, a Time domain resource assignment field, a Physical Uplink Control Channel (PUCCH) resource indicator field, a PDSCH to HARQ feedback timing indication field, an antenna port field, or a transmission configuration indication (TCI) field included in the DCI format carried by the second PDCCH candidate is related to the number of serving cells included in the target cell subset.

In one embodiment, a total number of fields included in the DCI format carried by the second PDCCH candidate is related to the number of serving cells included in the target cell subset being scheduled.

In one embodiment, a total number of fields included in the DCI format carried by the second PDCCH candidate is linear with the number of serving cells included in the target cell subset.

In one embodiment, a total number of fields of a same type included in the DCI format carried by the second PDCCH candidate is related to the number of serving cells included in the target cell subset, where the same type refers to one of or a combination of multiple of NDI, HARQ process number, RV, MCS, frequency domain resource assignment, time domain resource assignment, PUCCH resource indication, PDSCH to HARQ feedback timing indication, antenna port or TCI.


**Embodiment 8**

Embodiment 8 illustrates a schematic diagram of a relationship between a first cell subset and a second cell subset according to one embodiment of the present application, as shown in FIG. 8. In FIG. 8, each arc-top area represents a serving cell in the first cell set; in case A, each slash-filled area (with lines running from the upper right to the lower left) represents a serving cell in the second cell subset, and each backslash-filled area (with lines running from the upper left to the lower right) represents a serving cell in the first cell subset; in case B, each slash-filled area (with lines running from the upper right to the lower left) represents a serving cell in the second cell subset, and each cross-hatched area represents a serving cell belonging to both the first cell subset and the second cell subset.

In Embodiment 8, a first cell subset includes serving cells scheduled by the first PDCCH candidate of the present application, and a second cell subset includes serving cells scheduled by the second PDCCH candidate of the present application; a relationship between the first cell subset and the second cell subset is used to determine whether a number of times of monitoring of PDCCH candidate(s) of the first cell subset and a number of times of monitoring of PDCCH candidate(s) of the second cell subset are separately counted.

In one embodiment, the first cell subset includes all serving cells that can be scheduled by the first PDCCH candidate.

In one embodiment, the first cell subset includes only serving cells that are scheduled by the first PDCCH candidate.

In one embodiment, the first cell subset further includes serving cell(s) other than the serving cells scheduled by the first PDCCH candidate.

In one embodiment, the first cell subset includes all serving cells that can be simultaneously scheduled by the first PDCCH candidate.

In one embodiment, the first cell subset includes all serving cells configured to be simultaneously schedulable by the first PDCCH candidate.

In one embodiment, the first cell subset includes only one serving cell.

In one embodiment, the first cell subset includes multiple serving cells.

In one embodiment, (when the second PDCCH candidate is present) the second cell subset includes serving cells scheduled by the second PDCCH candidate.

In one embodiment, (when the second PDCCH candidate is present) the second cell subset includes all serving cells that can be scheduled by the second PDCCH candidate.

In one embodiment, (when the second PDCCH candidate is present) the second cell subset includes only serving cells scheduled by the second PDCCH candidate.

In one embodiment, (when the second PDCCH candidate is present) the second cell subset also includes serving cell(s) other than serving cells scheduled by the second PDCCH candidate.

In one embodiment, (when the second PDCCH candidate is present) the second cell subset includes all serving cells that can be simultaneously scheduled by the second PDCCH candidate.

In one embodiment, (when the second PDCCH candidate is present) the second cell subset includes all serving cells configured to be simultaneously schedulable by the second PDCCH candidate.

In one embodiment, the second cell subset includes only one serving cell.

In one embodiment, the second cell subset includes multiple serving cells.

In one embodiment, the second cell subset is the same as the target cell subset of the present application.

In one embodiment, the second cell subset is different from the target cell subset of the present application.

In one embodiment, there exists overlapping serving cell(s) between the second cell subset and the target cell subset of the present application.

In one embodiment, the relationship between the first cell subset and the second cell subset means whether the first cell subset and the second cell subset are orthogonal.

In one embodiment, the relationship between the first cell subset and the second cell subset means whether the first cell subset and the second cell subset are in a relationship of including and being included.

In one embodiment, the relationship between the first cell subset and the second cell subset means whether there exists overlapping serving cell(s) between the first cell subset and the second cell subset.

In one embodiment, the relationship between the first cell subset and the second cell subset means whether the first cell subset and the second cell subset are the same.

In one embodiment, the relationship between the first cell subset and the second cell subset means whether the first cell subset includes the second cell subset, or whether the second cell subset includes the first cell subset.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "the first cell subset and the second cell subset being not the same is used to determine a number of times of monitoring of PDCCH candidate(s) of the first cell subset and a number of times of monitoring of PDCCH candidate(s) of the second cell subset are separately counted" are equivalent or may be used interchangeably.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "for any of the first cell subset and the second cell subset, which are not the same, a number of times of monitoring of PDCCH candidate(s) is separately counted" are equivalent or may be used interchangeably.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "for any of the first cell subset and the second cell subset, which are mutually orthogonal, a number of times of monitoring of PDCCH candidate(s) is separately counted" are equivalent or may be used interchangeably.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "for any of the first cell subset and the second cell subset, which are not in a relationship of including and being included, a number of times of monitoring of PDCCH candidate(s) is separately counted" are equivalent or may be used interchangeably.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "a relationship between the first cell subset and the second cell subset is used to determine whether a number of times of monitoring of PDCCH candidate(s) of the first cell subset and a number of times of monitoring of PDCCH candidate(s) of the second cell subset are separately counted in a pre-defined time window" are equivalent or may be used interchangeably.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "a scheduling indication value associated with the first PDCCH candidate scheduling the first cell subset being equal to a scheduling indication value associated with the second PDCCH candidate scheduling the second cell subset is used to determine that a number of times of monitoring of PDCCH candidate(s) of the first cell subset and a number of times of monitoring of PDCCH candidate(s) of the second cell subset are not separately counted in a pre-defined time window" are equivalent or may be used interchangeably.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "a scheduling indication value associated with the first PDCCH candidate scheduling the first cell subset being equal to a scheduling indication value associated with the second PDCCH candidate scheduling the second cell subset is used to determine that a number of times of monitoring of PDCCH candidate(s) of the first cell subset and a number of times of monitoring of PDCCH candidate(s) of the second cell subset are not separately counted in a pre-defined time window" are equivalent or may be used interchangeably.

In one embodiment, the statements that "a relationship between the first cell subset and the second cell subset is used to determine whether a number of times of monitoring of PDCCH candidate(s) of the first cell subset and a number of times of monitoring of PDCCH candidate(s) of the second cell subset are separately counted" and that "for a scheduling indication value associated with the first PDCCH candidate and a scheduling indication value associated with the second PDCCH candidate that are equal, a number of times of monitoring of PDCCH candidate(s) is not separately counted" are equivalent or may be used interchangeably.

In one embodiment, "a relationship between the first cell subset and the second cell subset is used to determine whether a number of times of monitoring of PDCCH candidate(s) of the first cell subset and a number of times of monitoring of PDCCH candidate(s) of the second cell subset are separately counted" includes the following meaning: when the first cell subset and the second cell subset are not the same, a number of times of monitoring of PDCCH candidate(s) of the first cell subset and a number of times of monitoring of PDCCH candidate(s) of the second cell subset are separately counted in a pre-defined time window; otherwise, the number of times of monitoring of PDCCH candidate(s) of the first cell subset and the number of times of monitoring of PDCCH candidate(s) of the second cell subset are not separately counted in the pre-defined time window.

In one embodiment, "a relationship between the first cell subset and the second cell subset is used to determine whether a number of times of monitoring of PDCCH candidate(s) of the first cell subset and a number of times of monitoring of PDCCH candidate(s) of the second cell subset are separately counted" includes the following meaning: when the first cell subset includes the second cell subset or the second cell subset includes the first cell subset, a number of times of monitoring of PDCCH candidate(s) of the first cell subset and a number of times of monitoring of PDCCH candidate(s) of the second cell subset are not separately counted in a pre-defined time window; otherwise, the number of times of monitoring of PDCCH candidate(s) of the first cell subset and the number of times of monitoring of PDCCH candidate(s) of the second cell subset are separately counted in the pre-defined time window.

In one embodiment, "a relationship between the first cell subset and the second cell subset is used to determine whether a number of times of monitoring of PDCCH candidate(s) of the first cell subset and a number of times of monitoring of PDCCH candidate(s) of the second cell subset are separately counted" includes the following meaning: when the first cell subset and the second cell subset are orthogonal, a number of times of monitoring of PDCCH candidate(s) of the first cell subset and a number of times of monitoring of PDCCH candidate(s) of the second cell subset are separately counted in a pre-defined time window; otherwise, the number of times of monitoring of PDCCH candidate(s) of the first cell subset and the number of times of monitoring of PDCCH candidate(s) of the second cell subset are not separately counted in the pre-defined time window.

In one embodiment, "a relationship between the first cell subset and the second cell subset is used to determine whether a number of times of monitoring of PDCCH candidate(s) of the first cell subset and a number of times of monitoring of PDCCH candidate(s) of the second cell subset are separately counted" includes the following meaning: the relationship between the first cell subset and the second cell subset is used by the first node of the present application to determine whether a number of times of monitoring of PDCCH candidate(s) of the first cell subset and a number of times of monitoring of PDCCH candidate(s) of the second cell subset are separately counted.

In one embodiment, the relationship between the first cell subset and the second cell subset is used to determine whether a number of non-overlapped CCEs of the first cell subset and a number of non-overlapped CCEs of the second cell subset are separately counted.

In one embodiment, for any of the first cell subset and the second cell subset, which are not the same, a number of non-overlapped CCEs is separately counted.

In one embodiment, for any of the first cell subset and the second cell subset, which are orthogonal, a number of non-overlapped CCEs is separately counted.

In one embodiment, for any of the first cell subset and the second cell subset, which are not in a relationship of including and being included, a number of non-overlapped CCEs is separately counted.

In one embodiment, "a number of times of monitoring of PDCCH candidate(s) of the first cell subset and a number of times of monitoring of PDCCH candidate(s) of the second cell subset are separately counted" means that the counting of the number of times of monitoring of PDCCH candidate(s) of the first cell subset and the counting of the number of times of monitoring of PDCCH candidate(s) of the second cell subset are independent of each other.

In one embodiment, "a number of times of monitoring of PDCCH candidate(s) of the first cell subset and a number of times of monitoring of PDCCH candidate(s) of the second cell subset are separately counted" means that the counting of the number of times of monitoring of PDCCH candidate(s) of the first cell subset does not affect the counting of the number of times of monitoring of PDCCH candidate(s) of the second cell subset, and the counting of the number of times of monitoring of PDCCH candidate(s) of the second cell subset does not affect the counting of the number of times of monitoring of PDCCH candidate(s) of the first cell subset.

In one embodiment, "a number of times of monitoring of PDCCH candidate(s) of the first cell subset and a number of times of monitoring of PDCCH candidate(s) of the second cell subset are separately counted" means that the PDCCH candidate(s) of the first cell subset and the PDCCH candidate(s) of the second cell subset are separately counted.

In one embodiment, "a number of times of monitoring of PDCCH candidate(s) of the first cell subset and a number of times of monitoring of PDCCH candidate(s) of the second cell subset are separately counted" means that the PDCCH candidate(s) of the first cell subset and the PDCCH candidate(s) of the second cell subset are separately indexed.

In one embodiment, "a number of times of monitoring of PDCCH candidate(s) of the first cell subset and a number of times of monitoring of PDCCH candidate(s) of the second cell subset are separately counted" means that even if there are two PDCCH candidates respectively for the first cell subset and the second cell subset, which occupy the same CCE(s), have the same scrambling and carry the same size of DCI format, are associated with equal scheduling indication value and differ in index values as well as the numbers of scheduled serving cells, these two PDCCH candidates can still be separately counted for monitoring.

### Embodiment 9

Embodiment 9 illustrates a schematic diagram of a scheduling indication value associated with a first PDCCH candidate according to one embodiment of the present application, as shown in FIG. 9. In FIG. 9, each filled rectangle represents a PDCCH candidate included in a first search space set, and each cross-hatched rectangle represents a PDCCH candidate identified by a scheduling indication value associated with the first PDCCH candidate.

In Embodiment 9, a search space set to which the first PDCCH candidate of the present application belongs is a first search space set, and a control resource set associated with the first search space set is a first control resource set, the first control resource set including multiple CCEs, and the scheduling indication value associated with the first PDCCH candidate is used to determine a CCE subset occupied by the first PDCCH candidate in the first control resource set.

In one embodiment, the first search space set is a common search space set (CSS).

In one embodiment, the first search space set is a UE specific search space set (USS).

In one embodiment, an index of the first search space set is equal to 0.

In one embodiment, an index of the first search space set is greater than 0.

In one embodiment, the first search space set comprises multiple PDCCH candidates.

In one embodiment, the first search space set comprises at least the first PDCCH candidate.

In one embodiment, the first search space set comprises at least one PDCCH candidate.

In one embodiment, an index of the first control resource set is equal to 0.

In one embodiment, an index of the first control resource set is greater than 0.

In one embodiment, a control resource set associated with the first search space set is a control resource set to which the CCE(s) occupied by at least one PDCCH candidate included in the first search space set belongs/belong.

In one embodiment, a control resource set associated with the first search space set is a control resource set to which the time-frequency resources and spatial resources occupied by at least one PDCCH candidate included in the first search space set belong.

In one embodiment, the first PDCCH candidate occupies only one CCE.

In one embodiment, the first PDCCH candidate occupies at least one CCE.

In one embodiment, the first PDCCH candidate occupies multiple CCEs.

In one embodiment, the number of CCE(s) occupied by the first PDCCH candidate is equal to the aggregation level (AL) of the first PDCCH candidate.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate is used by the first node of the present application to determine CCE(s) occupied by the first PDCCH candidate from the first control resource set.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate is used to determine a starting CCE occupied by the first PDCCH candidate from the first control resource set.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate is used to determine an index of CCE(s) occupied by the first PDCCH candidate from the first control resource set.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate is used to determine all CCEs occupied by the first PDCCH candidate from the first control resource set.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate is used to determine P1 CCE subsets from the first control resource set, any one of the P1 CCE subsets comprises at least one CCE, and the first PDCCH candidate occupies one CCE subset of the P1 CCE subsets, P1 being a positive integer greater than 1.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate is used to determine from the first control resource set the distribution of CCE(s) occupied by the first PDCCH candidate in the first control resource set.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate is used to calculate according to the formula of search space set to obtain the CCE(s) occupied by the first PDCCH candidate from the first control resource set.

In one embodiment, the statement that "the scheduling indication value associated with the first PDCCH candidate is used to determine CCE(s) occupied by the first PDCCH candidate in the first control resource set" includes the following meaning: the scheduling indication value associated with the first PDCCH candidate serves as a pre-defined input parameter of the formula used to determine the CCE(s) occupied by the first PDCCH candidate.

In one embodiment, the statement that "the scheduling indication value associated with the first PDCCH candidate is used to determine CCE(s) occupied by the first PDCCH candidate in the first control resource set" is implemented by satisfying the following relationship:

the first search space set s is associated with the first control resource set p, L represents an aggregation level of the first PDCCH candidate, and an index of CCE(s) occupied by the first PDCCH candidate $m_{s,n_{SI}}^{(L)}$ with respect to the scheduling indication value $n_{SI}$ associated with the first PDCCH candidate satisfies:

$$ L \cdot \left\{ \left( Y_{p,n_{s,f}^{\mu}} + \left\lfloor \frac{m_{s,n_{SI}}^{(L)} \cdot N_{\text{CCE},p}}{L \cdot M_{s,\max}^{(L)}} \right\rfloor + n_{SI} \right) mod \left\lfloor N_{\text{CCE},p}/L \right\rfloor \right\} + i $$

where $i = 0, \cdots, L - 1$, $Y_{p,n_{s,f}^{\mu}}$ is a value related to the first control resource set p, $N_{\text{CCE},p}$ represents the number of CCEs in the first control resource set p, and $M_{s,\max}^{(L)}$ represents the number of PDCCH candidates belonging to the first search space set s and employing aggregation level L.

## Embodiment 10

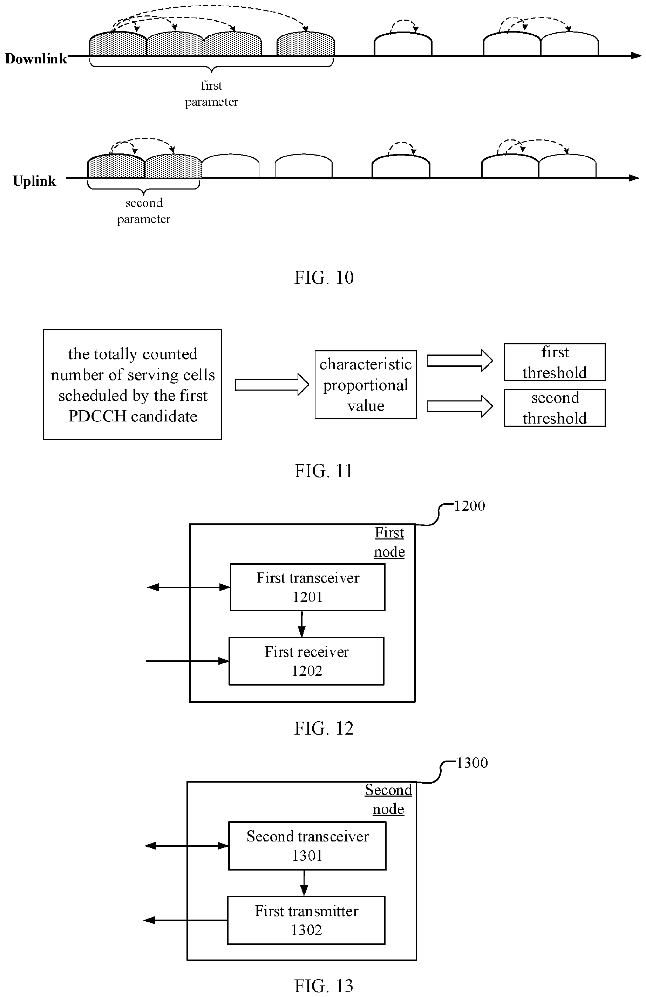

Embodiment 10 illustrates a schematic diagram of a first parameter and a second parameter according to one embodiment of the present application, as shown in FIG. 10. In FIG. 10, each arc-top region in the upper part represents a downlink serving cell capable of being transmitted simultaneously, and each arc-top region in the lower half represents an uplink serving cell capable of being transmitted simultaneously, and the serving cells represented by the arc-top regions having the same filling can be scheduled simultaneously by a single PDCCH.

In Embodiment 10, the third information block of the present application is used to indicate a capability parameter set of a transmitter of the third information block, the capability parameter set of the transmitter of the third information block including a first parameter and a second parameter; the first parameter is used to indicate whether a transmitter of the third information block supports a number of downlink serving cells scheduled by a same PDCCH being greater than 1, while the second parameter is used to indicate whether the transmitter of the third information block supports a number of uplink serving cells scheduled by a same PDCCH being greater than 1.

In one embodiment, the first parameter is a Boolean parameter (BOOLEAN) and the second parameter is a Boolean parameter.

In one embodiment, the first parameter is an integer and the second parameter is an integer.

In one embodiment, the first parameter is a list of serving cells and the second parameter is a list of serving cells.

In one embodiment, the first parameter is an enumerated (ENUMERATED) parameter and the second parameter is an enumerated parameter.

In one embodiment, the first parameter is a CHOICE type parameter and the second parameter is a CHOICE type parameter.

In one embodiment, the first parameter is a SEQUENCE type parameter and the second parameter is a SEQUENCE type parameter.

In one embodiment, "the first parameter is used to indicate whether a transmitter of the third information block supports a number of downlink serving cells scheduled by a same PDCCH being greater than 1" includes the following meaning: all or part of the first parameter is used to explicitly or implicitly indicate whether the transmitter of the third information block supports the number of downlink serving cells scheduled by the same PDCCH being greater than 1.

In one embodiment, "the first parameter is used to indicate whether a transmitter of the third information block supports a number of downlink serving cells scheduled by a same PDCCH being greater than 1" includes the following meaning: all or part of the first parameter is used to explicitly or implicitly indicate a maximum number of downlink serving cells scheduled by the same PDCCH being supported by the transmitter of the third information block.

In one embodiment, "the first parameter is used to indicate whether a transmitter of the third information block supports a number of downlink serving cells scheduled by a same PDCCH being greater than 1" includes the following meaning: all or part of the first parameter is used to explicitly or implicitly indicate a number of downlink serving cells scheduled by the same PDCCH being supported by the transmitter of the third information block.

In one embodiment, "the first parameter is used to indicate whether a transmitter of the third information block supports a number of downlink serving cells scheduled by a same PDCCH being greater than 1" includes the following meaning: all or part of the first parameter is used to explicitly or implicitly indicate a set or a combination of downlink serving cells scheduled by the same PDCCH being supported by the transmitter of the third information block.

In one embodiment, downlink serving cells scheduled by a same PDCCH are serving cells scheduled by a same DL grant or DL assignment.

In one embodiment, downlink serving cells scheduled by a same PDCCH are serving cells simultaneously scheduled by a same DL grant or DL assignment.

In one embodiment, downlink serving cells scheduled by a same PDCCH are serving cells to which all downlink channels or signals simultaneously scheduled by a same PDCCH respectively belong.

In one embodiment, downlink serving cells scheduled by a same PDCCH are serving cells to which all downlink channels or signals simultaneously scheduled by a DCI format carried by a same PDCCH candidate respectively belong.

In one embodiment, downlink serving cells scheduled by a same PDCCH are serving cells to which all downlink channels or signals simultaneously scheduled by a same DCI format respectively belong.

In one embodiment, downlink serving cells scheduled by a same PDCCH are serving cells to which all PDSCHs simultaneously scheduled by a same DCI format respectively belong.

In one embodiment, a number of downlink serving cells scheduled by a same PDCCH is equal to a number of downlink channels or signals being scheduled by the same PDCCH.

In one embodiment, a number of downlink serving cells scheduled by a same PDCCH is no greater than a number of downlink channels or signals being scheduled by the same PDCCH

In one embodiment, a number of downlink serving cells scheduled by a same PDCCH is equal to a number of PDSCHs being scheduled by the same PDCCH.

In one embodiment, a number of downlink serving cells scheduled by a same PDCCH is no greater than a number of PDSCHs being scheduled by the same PDCCH.

In one embodiment, "the second parameter is used to indicate whether a transmitter of the third information block supports a number of uplink serving cells scheduled by a same PDCCH being greater than 1" includes the following meaning: all or part of the second parameter is used to explicitly or implicitly indicate whether the transmitter of the third information block supports the number of uplink serving cells scheduled by the same PDCCH being greater than 1.

In one embodiment, "the second parameter is used to indicate whether a transmitter of the third information block supports a number of uplink serving cells scheduled by a same PDCCH being greater than 1" includes the following meaning: all or part of the second parameter is used to explicitly or implicitly indicate a maximum number of uplink serving cells scheduled by the same PDCCH being supported by the transmitter of the third information block.

In one embodiment, "the second parameter is used to indicate whether a transmitter of the third information block supports a number of uplink serving cells scheduled by a same PDCCH being greater than 1" includes the following meaning: all or part of the second parameter is used to explicitly or implicitly indicate a number of uplink serving cells scheduled by the same PDCCH being supported by the transmitter of the third information block.

In one embodiment, "the second parameter is used to indicate whether a transmitter of the third information block supports a number of uplink serving cells scheduled by a same PDCCH being greater than 1" includes the following meaning: all or part of the second parameter is used to explicitly or implicitly indicate a set or a combination of uplink serving cells scheduled by the same PDCCH being supported by the transmitter of the third information block.

In one embodiment, uplink serving cells scheduled by a same PDCCH are serving cells scheduled by a same UL grant or UL assignment.

In one embodiment, uplink serving cells scheduled by a same PDCCH are serving cells simultaneously scheduled by a same UL grant or UL assignment.

In one embodiment, uplink serving cells scheduled by a same PDCCH are serving cells to which all uplink channels or signals simultaneously scheduled by a same PDCCH respectively belong.

In one embodiment, uplink serving cells scheduled by a same PDCCH are serving cells to which all uplink channels or signals simultaneously scheduled by a DCI format carried by a same PDCCH candidate respectively belong.

In one embodiment, uplink serving cells scheduled by a same PDCCH are serving cells to which all uplink channels or signals simultaneously scheduled by a same DCI format respectively belong.

In one embodiment, uplink serving cells scheduled by a same PDCCH are serving cells to which all PUSCHs simultaneously scheduled by a same DCI format respectively belong.

In one embodiment, a number of uplink serving cells scheduled by a same PDCCH is equal to a number of uplink channels or signals being scheduled by the same PDCCH.

In one embodiment, a number of uplink serving cells scheduled by a same PDCCH is no greater than a number of uplink channels or signals being scheduled by the same PDCCH.

In one embodiment, a number of uplink serving cells scheduled by a same PDCCH is equal to a number of PUSCHs being scheduled by the same PDCCH.

In one embodiment, a number of uplink serving cells scheduled by a same PDCCH is no greater than a number of PUSCHs being scheduled by the same PDCCH.

In one embodiment, when a DCI format carried by the first PDCCH candidate is used for scheduling downlink, the number of downlink serving cells that are simultaneously scheduled by the DCI format carried by the first PDCCH candidate is not greater than the number of downlink serving cells that are scheduled by a same PDCCH as indicated by a capability report of the first node.

In one embodiment, when a DCI format carried by the first PDCCH candidate is used for scheduling uplink, the number of uplink serving cells that are simultaneously scheduled by the DCI format carried by the first PDCCH candidate is not greater than the number of uplink serving cells that are scheduled by a same PDCCH as indicated by a capability report of the first node.

In one embodiment, when a DCI format carried by the first PDCCH candidate is used for scheduling downlink, the number of downlink serving cells that are simultaneously scheduled by the DCI format carried by the first PDCCH candidate is not greater than the number of downlink serving cells that are scheduled by a same PDCCH as supported by the first node; when the first node supports, as indicated by the first parameter, that the number of downlink serving cells scheduled by the same PDCCH is greater than 1, the number of the downlink serving cells scheduled by the same PDCCH supported by the first node is pre-defined; or the number of the downlink serving cells scheduled by the same PDCCH supported by the first node is equal to the first parameter.

In one embodiment, when a DCI format carried by the first PDCCH candidate is used for scheduling uplink, the number of uplink serving cells that are simultaneously scheduled by the DCI format carried by the first PDCCH candidate is not greater than the number of uplink serving cells that are scheduled by a same PDCCH as supported by the first node; when the first node supports, as indicated by the second parameter, that the number of uplink serving cells scheduled by the same PDCCH is greater than 1, the number of the uplink serving cells scheduled by the same PDCCH supported by the first node is pre-defined; or the number of the uplink serving cells scheduled by the same PDCCH supported by the first node is equal to the second parameter.

**Embodiment 11**

Embodiment 11 illustrates a schematic diagram of a first threshold and a second threshold according to one embodiment of the present application, as shown in FIG. 11. In FIG. 11, two boxes represent a first threshold and a second threshold, respectively, and two other boxes represent the characteristic proportional value and the totally counted number of serving cells scheduled by the first PDCCH candidate, respectively.

In Embodiment 11, any CCE occupied by the first PDCCH candidate of the present application belongs to a first time window in time domain, and a subcarrier spacing (SCS) of subcarriers occupied in frequency domain by any CCE occupied by the first PDCCH candidate is equal to a first SCS; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the first threshold and the second threshold are both related to a characteristic proportional value, and a totally counted number of serving cells scheduled by the first PDCCH candidate is used to determine the characteristic proportional value, the characteristic proportional value being no less than 0.

In one embodiment, the first time window is a slot, or the first time window consists of multiple time-domain consecutive slots.

In one embodiment, the first time window is a span.

In one embodiment, the first time window is time-domain resources occupied by an Aligned Span.

In one embodiment, any multicarrier symbol comprised by the first time window is an Orthogonal Frequency Division Multiplexing (OFDM) Symbol.

In one embodiment, any multicarrier symbol comprised by the first time window is a time-domain symbol.

In one embodiment, the first time window comprises multiple consecutive time-domain symbols.

In one embodiment, the first time window is a shortest time interval of all time intervals between earliest OFDM symbols in two PDCCH Occasions.

In one embodiment, the first PDCCH candidate is monitored in the first time window.

In one embodiment, a Monitoring Occasion (MO) occupied by the first PDCCH candidate in time domain belongs to the first time window.

In one embodiment, a number of time-domain symbols occupied by a control resource set to which the first PDCCH candidate belongs is not greater than a number of time-domain symbols included in the first time window.

In one embodiment, the first time window comprises at least one time-domain consecutive multicarrier symbol corresponding to the first subcarrier spacing.

In one embodiment, when the first time window comprises more than one multicarrier symbol, any two multi-carrier symbols comprised by the first time window are of an equal time length.

In one embodiment, when the first time window comprises more than one multicarrier symbol, the first time window comprises two multicarrier symbols of unequal time lengths.

In one embodiment, a subcarrier spacing (SCS) of any subcarrier occupied in frequency domain by any CCE occupied by the first PDCCH candidate is equal to the first subcarrier spacing.

In one embodiment, a subcarrier spacing (SCS) configured for a BWP in frequency domain to which any CCE occupied by the first PDCCH candidate belongs is equal to the first subcarrier spacing.

In one embodiment, a subcarrier spacing (SPS) configured for an active BWP in a serving cell to which the first PDCCH candidate belongs is equal to the first subcarrier spacing.

In one embodiment, a subcarrier spacing (SPS) configured for an active BWP in a Scheduling Cell to which the first PDCCH candidate belongs is equal to the first subcarrier spacing.

In one embodiment, the first subcarrier spacing is measured in Hz.

In one embodiment, the first subcarrier spacing is measured in kHz.

In one embodiment, the first subcarrier spacing is equal to one of 15kHz, 30kHz, 60kHz, 120kHz, or 240kHz.

In one embodiment, the first subcarrier spacing is equal to one of 15kHz, 30kHz, 60kHz, or 120kHz.

In one embodiment, further comprising:

receiving a first synchronization signal;
herein, the first synchronization signal is used to determine a position of the first time window in time domain.

In one embodiment, further comprising:

receiving a first synchronization signal;
herein, the first synchronization signal is used to determine timing of the first time window.

In one embodiment, the number of PDCCH candidates using the first subcarrier spacing being monitored in the first time window is for a scheduled cell.

In one embodiment, the number of PDCCH candidates using the first subcarrier spacing being monitored in the first time window is for all of the scheduling cells of one cell group that have an active BWP and use the first subcarrier spacing.

In one embodiment, statements that "the number of PDCCH candidates using the first subcarrier spacing being monitored in the first time window" and "the number of PDCCH candidates using the first subcarrier spacing being monitored in the first time window for any serving cell included in one cell group" are equivalent or may be used interchangeably.

In one embodiment, statements that "the number of PDCCH candidates using the first subcarrier spacing being monitored in the first time window" and "the number of PDCCH candidates using the first subcarrier spacing being monitored in the first time window for any cell subset included in one cell group" are equivalent or may be used interchangeably.

In one embodiment, statements that "the number of PDCCH candidates using the first subcarrier spacing being monitored in the first time window" and "the total number of PDCCH candidates monitored in the first time window for all scheduling cells that use the first subcarrier spacing belonging to one cell group" are equivalent or may be used interchangeably.

In one embodiment, statements that "the number of PDCCH candidates using the first subcarrier spacing being monitored in the first time window" and "the total number of blind detections or blind decodings for PDCCHs using the first subcarrier spacing in the first time window" are equivalent or may be used interchangeably.

In one embodiment, statements that "the number of PDCCH candidates using the first subcarrier spacing being monitored in the first time window" and "the total number of channel decodings for PDCCHs using the first subcarrier spacing in the first time window" are equivalent or may be used interchangeably.

In one embodiment, statements that "the number of PDCCH candidates using the first subcarrier spacing being monitored in the first time window" and "the total number of blind detections or blind decodings for PDCCHs using the first subcarrier spacing in the first time window for one or more DCI Formats" are equivalent or may be used interchangeably.

In one embodiment, statements that "the number of PDCCH candidates using the first subcarrier spacing being monitored in the first time window" and "the number of PDCCH candidates using the first subcarrier spacing being monitored in the first time window that are used to schedule at least one serving cell included in one cell group" are equivalent or may be used interchangeably.

In one embodiment, statements that "the number of PDCCH candidates using the first subcarrier spacing being monitored in the first time window" and "the number of PDCCH candidates being monitored in the first time window using the first subcarrier spacing and assumed to carry a given DCI format" are equivalent or may be used interchangeably.

In one embodiment, statements that "the number of PDCCH candidates using the first subcarrier spacing being monitored in the first time window" and "the total number of times of monitoring for PDCCHs using the first subcarrier spacing performed in the first time window" are equivalent or may be used interchangeably

In one embodiment, the number of PDCCH candidates using the first subcarrier spacing being monitored in the first time window is configured.

In one embodiment, the number of PDCCH candidates using the first subcarrier spacing being monitored in the first time window is configured for a scheduling cell.

In one embodiment, any two PDCCH candidates monitored in the first time window have different characteristic attributes, where the characteristic attributes include at least one of occupied CCEs, used Scrambling, a corresponding DCI Payload Size or a corresponding scheduling indication value.

In one embodiment, statements that "a number of PDCCH candidate(s) using the first SCS being monitored in the first time window is no greater than a first threshold" and "the first node is not required to monitor PDCCH candidates using the first SCS of which the number exceeds the first threshold in the first time window" are equivalent or may be used interchangeably.

In one embodiment, statements that "a number of PDCCH candidate(s) using the first SCS being monitored in the first time window is no greater than a first threshold" and "the first node does not expect that a number of PDCCH candidates using the first SCS being monitored in the first time window exceeds the first threshold" are equivalent or may be used interchangeably.

In one embodiment, the network side ensures during its configuration that a number of PDCCH candidates using the first SCS monitored in the first time window does not exceed the first threshold.

In one embodiment, when the number of PDCCH candidates using the first SCS monitored in the first time window is configured to exceed the first threshold, the processing of the first node of the present application is determined by Implementation.

In one embodiment, when the number of PDCCH candidates using the first SCS monitored in the first time window is configured to exceed the first threshold, the first node of the present application may either monitor the PDCCH candidates using the first SCS beyond the first threshold, or drop monitoring the PDCCH candidates using the first SCS beyond the first threshold.

In one embodiment, the number of PDCCH candidates using the first SCS monitored in the first time window is less than the first threshold.

In one embodiment, the number of PDCCH candidates using the first SCS monitored in the first time window may be equal to the first threshold.

In one embodiment, the number of non-overlapped CCEs using the first subcarrier spacing being monitored in the first time window is for a scheduled cell.

In one embodiment, the number of non-overlapped CCEs using the first subcarrier spacing being monitored in the first time window is for a cell subset included in one cell group.

In one embodiment, the number of non-overlapped CCEs using the first subcarrier spacing being monitored in the first time window is for all of the scheduling cells of one cell group that have an active BWP and use the first subcarrier spacing.

In one embodiment, statements that "the number of non-overlapped CCEs using the first subcarrier spacing being monitored in the first time window" and "the number of non-overlapped CCEs using the first subcarrier spacing being monitored in the first time window for any serving cell included in one cell group" are equivalent or may be used interchangeably.

In one embodiment, statements that "the number of non-overlapped CCEs using the first subcarrier spacing being monitored in the first time window" and "the number of non-overlapped CCEs using the first subcarrier spacing being monitored in the first time window for any cell subset included in one cell group" are equivalent or may be used interchangeably.

In one embodiment, statements that "the number of non-overlapped CCEs using the first subcarrier spacing being monitored in the first time window" and "the total number of non-overlapped CCEs monitored in the first time window for all scheduling cells that use the first subcarrier spacing belonging to one cell group" are equivalent or may be used interchangeably.

In one embodiment, statements that "the number of non-overlapped CCEs using the first subcarrier spacing being monitored in the first time window" and "the total number of non-overlapped CCEs using the first subcarrier spacing monitored in the first time window that are occupied by at least one PDCCH candidate" are equivalent or may be used interchangeably.

In one embodiment, statements that "the number of non-overlapped CCEs using the first subcarrier spacing being monitored in the first time window" and "the total number of non-overlapped CCEs using the first subcarrier spacing by which the time-domain resources occupied belong to the first time window" are equivalent or may be used interchangeably.

In one embodiment, statements that "the number of non-overlapped CCEs using the first subcarrier spacing being monitored in the first time window" and "the total number of non-overlapped CCEs being monitored using the first subcarrier spacing by which the time-domain resources occupied belong to the first time window" are equivalent or may be used interchangeably.

In one embodiment, statements that "the number of non-overlapped CCEs using the first subcarrier spacing being monitored in the first time window" and "the total number of non-overlapped CCEs occupied by at least one PDCCH candidate using the first subcarrier spacing by which the time-domain resources occupied belong to the first time window" are equivalent or may be used interchangeably.

In one embodiment, statements that "the number of non-overlapped CCEs using the first subcarrier spacing being monitored in the first time window" and "the total number of non-overlapped CCEs being monitored using the first subcarrier spacing by which the time-domain resources occupied belong to the first time window and by which the frequency-domain resources occupied belong to an active BWP on serving cell(s) of one cell group" are equivalent or may be used interchangeably.

In one embodiment, when two CCEs correspond to different CORESET indexes or correspond to different start time-domain symbols for receptions of respectively corresponding PDCCH candidates, the two CCEs are non-overlapped.

In one embodiment, the first threshold is equal to $M_{\mathrm{PDCCH}}^{\mathrm{total,slot},\mu}$, where $\mu$ represents an index of the first subcarrier spacing and the first time window is one slot.

In one embodiment, the first threshold is equal to $min\left(M_{\mathrm{PDCCH}}^{\mathrm{max,slot},\mu}, M_{\mathrm{PDCCH}}^{\mathrm{total,slot},\mu}\right)$, where $\mu$ represents an index of the first subcarrier spacing and the first time window is one slot.

In one embodiment, the first threshold is equal to $min\left(\gamma \cdot M_{\mathrm{PDCCH}}^{\mathrm{max,slot},\mu}, M_{\mathrm{PDCCH}}^{\mathrm{total,slot},\mu}\right)$, where $\mu$ represents an

index of the first subcarrier spacing and the first time window is one slot, and $\gamma$ represents a factor indicated by a capability report of the first node.

In one embodiment, the first threshold is equal to $M_{\text{PDCCH}}^{\text{total},(X,Y),\mu}$, where $\mu$ represents an index of the first subcarrier spacing and the first time window is X time-domain consecutive multicarrier symbols.

In one embodiment, the first threshold is equal to $min\left(M_{\text{PDCCH}}^{\text{max},(X,Y),\mu}, M_{\text{PDCCH}}^{\text{total},(X,Y),\mu}\right)$, where $\mu$ represents an index of the first subcarrier spacing and the first time window is X time-domain consecutive multicarrier symbols.

In one embodiment, the second threshold is equal to $C_{\text{PDCCH}}^{\text{total},\text{slot},\mu}$, where $\mu$ represents an index of the first subcarrier spacing and the first time window is one slot.

In one embodiment, the second threshold is equal to $min\left(C_{\text{PDCCH}}^{\text{max},\text{slot},\mu}, C_{\text{PDCCH}}^{\text{total},\text{slot},\mu}\right)$, where $\mu$ represents an index of the first subcarrier spacing and the first time window is one slot.

In one embodiment, the second threshold is equal to $min\left(\gamma \cdot C_{\text{PDCCH}}^{\text{max},\text{slot},\mu}, C_{\text{PDCCH}}^{\text{total},\text{slot},\mu}\right)$, where $\mu$ represents an index of the first subcarrier spacing and the first time window is one slot, and $\gamma$ represents a factor indicated by a capability report of the first node.

In one embodiment, the second threshold is equal to $C_{\text{PDCCH}}^{\text{total},(X,Y),\mu}$, where $\mu$ represents an index of the first subcarrier spacing and the first time window is X time-domain consecutive multicarrier symbols.

In one embodiment, the second threshold is equal to *min* $min\left(C_{\text{PDCCH}}^{\text{max},(X,Y),\mu}, C_{\text{PDCCH}}^{\text{total},(X,Y),\mu}\right)$, where $\mu$ represents an index of the first subcarrier spacing and the first time window is X time-domain consecutive multicarrier symbols.

In one embodiment, the first threshold and the second threshold may or may not be equal.

In one embodiment, the first threshold and the second threshold are mutually independent.

In one embodiment, the first threshold and the second threshold are unrelated.

In one embodiment, the first threshold and the second threshold are related.

In one embodiment, the first threshold and the second threshold are linearly correlated.

In one embodiment, there is a proportional relationship between the first threshold and the second threshold.

In one embodiment, the characteristic proportional value is equal to

$$\left(N_{\text{cells},0}^{\text{DL},\mu} + \gamma \cdot N_{\text{cells},1}^{\text{DL},\mu}\right)/\Sigma_{j=0}^{3}\left(N_{\text{cells},0}^{\text{DL},j} + \gamma \cdot N_{\text{cells},1}^{\text{DL},j}\right).$$

In one embodiment, the characteristic proportional value is equal to $N_{\text{cells},\text{r16}}^{\text{DL},(X,Y),\mu}/\Sigma_{j=0}^{1} N_{\text{cells},\text{r16}}^{\text{DL},j}$.

In one embodiment, the characteristic proportional value is greater than 0.

In one embodiment, the characteristic proportional value can be equal to 0, when the first cell group of the present application does not include multiple serving cells being scheduled by a same PDCCH, the characteristic proportional value is equal to 0.

In one embodiment, the characteristic proportional value can be equal to 0, when any two serving cells in the first cell group of the present application are scheduled by different PDCCHs, the characteristic proportional value is equal to 0.

In one embodiment, the statement that "the first threshold and the second threshold are both related to a characteristic proportional value" includes the following meaning: both the first threshold and the second threshold change with the characteristic proportional value.

In one embodiment, the statement that "the first threshold and the second threshold are both related to a characteristic proportional value" includes the following meaning: the characteristic proportional value is used to determine the first threshold and the second threshold.

In one embodiment, the statement that "the first threshold and the second threshold are both related to a characteristic proportional value" includes the following meaning: a formula for calculating the first threshold and a formula for calculating the second threshold both include the characteristic proportional value as a parameter.

In one embodiment, the statement that "the first threshold and the second threshold are both related to a characteristic proportional value" includes the following meaning: the characteristic proportional value is used to calculate the first threshold and the second threshold.

In one embodiment, the statement that "the first threshold and the second threshold are both related to a characteristic proportional value" includes the following meaning: the first threshold is equal to a maximum integer that is no greater than a first intermediate value, and the second threshold is equal to a maximum integer that is no greater than a second intermediate value; a first quantity value is a positive integer indicated by a capability report of the first node of the present application; the first SCS is used to determine a first reference quantity value and a second reference quantity value; the first quantity value, the first reference quantity value and the characteristic proportional value are used together to determine the first intermediate value, while the first quantity value, the second reference quantity value and the characteristic proportional value are used together to determine the second intermediate value.

In one embodiment, the statement that "the first threshold and the second threshold are both related to a characteristic proportional value" includes the following meaning: both the first threshold and the second threshold are positively correlated to the characteristic proportional value.

In one embodiment, the statement that "the first threshold and the second threshold are both related to a characteristic proportional value" includes the following meaning: both the first threshold and the second threshold are proportional to the characteristic proportional value.

In one embodiment, the statement that "the first threshold and the second threshold are both related to a characteristic proportional value" includes the following meaning: both the first threshold and the second threshold are linearly correlated to the characteristic proportional value.

In one embodiment, the statement that "the first threshold and the second threshold are both related to a characteristic proportional value" includes the following meaning: the first threshold is equal to a smaller value for comparison between two first-type candidate thresholds, while the second threshold is equal to a smaller value for comparison between two second-type candidate thresholds, at least one of the two first-type candidate thresholds is related to the characteristic proportional value, and at least one of the two second-type candidate thresholds is related to the characteristic proportional value.

In one embodiment, the statement that "the first threshold and the second threshold are both related to a characteristic proportional value" is implemented by satisfying the following equation:

$$M_{\mathrm{PDCCH}}^{\mathrm{total,slot},\mu} = \left\lfloor N_{\mathrm{cells}}^{\mathrm{cap}} \cdot M_{\mathrm{PDCCH}}^{\mathrm{max,slot},\mu} \cdot \vartheta \right\rfloor$$

$$C_{\mathrm{PDCCH}}^{\mathrm{total,slot},\mu} = \left\lfloor N_{\mathrm{cells}}^{\mathrm{cap}} \cdot C_{\mathrm{PDCCH}}^{\mathrm{max,slot},\mu} \cdot \vartheta \right\rfloor$$

where $M_{\mathrm{PDCCH}}^{\mathrm{total,slot},\mu}$ represents the first threshold, $C_{\mathrm{PDCCH}}^{\mathrm{total,slot},\mu}$ represents the second threshold, $\vartheta$ represents the characteristic proportional value, $N_{\mathrm{cells}}^{\mathrm{cap}}$ represents the number of serving cells being configured or the number of serving cells of the capability report of the first node, $M_{\mathrm{PDCCH}}^{\mathrm{max,slot},\mu}$ and $C_{\mathrm{PDCCH}}^{\mathrm{max,slot},\mu}$ are pre-defined values related to the subcarrier spacing $\mu$, and the first time window is a slot.

In one embodiment, the statement that "the first threshold and the second threshold are both related to a characteristic proportional value" includes the following meaning: the first threshold is equal to a smaller value for comparison between $M_{\mathrm{PDCCH}}^{\mathrm{max,slot},\mu}$ and $M_{\mathrm{PDCCH}}^{\mathrm{total,slot},\mu}$, the second threshold is equal to a smaller value for comparison between $C_{\mathrm{PDCCH}}^{\mathrm{max,slot},\mu}$ and $C_{\mathrm{PDCCH}}^{\mathrm{total,slot},\mu}$, where $M_{\mathrm{PDCCH}}^{\mathrm{max,slot},\mu}$ and $C_{\mathrm{PDCCH}}^{\mathrm{max,slot},\mu}$ are both pre-defined values related to the subcarrier spacing $\mu$. $M_{\mathrm{PDCCH}}^{\mathrm{total,slot},\mu}$ and $C_{\mathrm{PDCCH}}^{\mathrm{total,slot},\mu}$ are equal to $\left\lfloor N_{\mathrm{cells}}^{\mathrm{cap}} \cdot M_{\mathrm{PDCCH}}^{\mathrm{max,slot},\mu} \cdot \vartheta \right\rfloor$ and $\left\lfloor N_{\mathrm{cells}}^{\mathrm{cap}} \cdot C_{\mathrm{PDCCH}}^{\mathrm{max,slot},\mu} \cdot \vartheta \right\rfloor$, respectively, where $\vartheta$ stands for the characteristic proportional value, $N_{\mathrm{cells}}^{\mathrm{cap}}$ represents the number of serving cells being configured or the number of serving cells of the capability report of the first node, and the first time window is a slot.

In one embodiment, the statement that "the first threshold and the second threshold are both related to a characteristic proportional value" includes the following meaning: the first threshold is equal to a smaller value for comparison between $\gamma \cdot M_{\mathrm{PDCCH}}^{\mathrm{max,slot},\mu}$ and $M_{\mathrm{PDCCH}}^{\mathrm{total,slot},\mu}$, the second threshold is equal to a smaller value for comparison between $\gamma \cdot C_{\mathrm{PDCCH}}^{\mathrm{max,slot},\mu}$ and $C_{\mathrm{PDCCH}}^{\mathrm{total,slot},\mu}$, where $M_{\mathrm{PDCCH}}^{\mathrm{max,slot},\mu}$ and $C_{\mathrm{PDCCH}}^{\mathrm{max,slot},\mu}$ are both pre-defined values related to the subcarrier spacing $\mu$. $M_{\mathrm{PDCCH}}^{\mathrm{total,slot},\mu}$ and $C_{\mathrm{PDCCH}}^{\mathrm{total,slot},\mu}$ are equal to $\left\lfloor N_{\mathrm{cells}}^{\mathrm{cap}} \cdot M_{\mathrm{PDCCH}}^{\mathrm{max,slot},\mu} \cdot \vartheta \right\rfloor$ and $\left\lfloor N_{\mathrm{cells}}^{\mathrm{cap}} \cdot C_{\mathrm{PDCCH}}^{\mathrm{max,slot},\mu} \cdot \vartheta \right\rfloor$,

respectively, where $\vartheta$ stands for the characteristic proportional value, $N_{\text{cells}}^{\text{cap}}$ represents the number of serving cells being configured or the number of serving cells of the capability report of the first node, $\gamma$ is a default factor or a factor of the capability report of the first node, and the first time window is a slot.

In one embodiment, the statement that "the first threshold and the second threshold are both related to a characteristic proportional value" is implemented by satisfying the following equation:

$$M_{\text{PDCCH}}^{\text{total},(X,Y),\mu} = \left\lfloor N_{\text{cells}}^{\text{cap-r16}} \cdot M_{\text{PDCCH}}^{\max,(X,Y),\mu} \cdot \vartheta \right\rfloor$$

$$C_{\text{PDCCH}}^{\text{total},(X,Y),\mu} = \left\lfloor N_{\text{cells}}^{\text{cap-r16}} \cdot C_{\text{PDCCH}}^{\max,(X,Y),\mu} \cdot \vartheta \right\rfloor$$

where $M_{\text{PDCCH}}^{\text{total},(X,Y),\mu}$ represents the first threshold, $C_{\text{PDCCH}}^{\text{total},(X,Y),\mu}$ represents the second threshold, $\vartheta$ represents the characteristic proportional value, $N_{\text{cells}}^{\text{cap-r16}}$ represents the number of serving cells being configured or the number of serving cells of the capability report of the first node, $M_{\text{PDCCH}}^{\max,(X,Y),\mu}$ and $C_{\text{PDCCH}}^{\max,(X,Y),\mu}$ are pre-defined values related to the subcarrier spacing $\mu$, and the first time window comprises X time-domain consecutive multicarrier symbols.

In one embodiment, the statement that "the first threshold and the second threshold are both related to a characteristic proportional value" includes the following meaning: the first threshold is equal to a smaller value for comparison between $M_{\text{PDCCH}}^{\max,(X,Y),\mu}$ and $M_{\text{PDCCH}}^{\text{total},(X,Y),\mu}$, the second threshold is equal to a smaller value for comparison between $C_{\text{PDCCH}}^{\max,(X,Y),\mu}$ and $C_{\text{PDCCH}}^{\text{total},(X,Y),\mu}$, where $M_{\text{PDCCH}}^{\max,(X,Y),\mu}$ and $C_{\text{PDCCH}}^{\max,(X,Y),\mu}$ are both pre-$\mu$. $M_{\text{PDCCH}}^{\text{total},(X,Y),\mu}$ and $C_{\text{PDCCH}}^{\text{total},(X,Y),\mu}$ are equal to $\left\lfloor N_{\text{cells}}^{\text{cap-r16}} \cdot M_{\text{PDCCH}}^{\max,(X,Y),\mu} \cdot \vartheta \right\rfloor$ and $\left\lfloor N_{\text{cells}}^{\text{cap-r16}} \cdot C_{\text{PDCCH}}^{\max,(X,Y),\mu} \cdot \vartheta \right\rfloor$, respectively, where $\vartheta$ stands for the characteristic proportional value, $N_{\text{cells}}^{\text{cap-r16}}$ represents the number of serving cells being configured or the number of serving cells of the capability report of the first node, and the first time window comprises X time-domain consecutive multicarrier symbols.

In one embodiment, the totally counted number of serving cells scheduled by the first PDCCH candidate is a number of serving cells equivalent to all serving cells scheduled by the first PDCCH candidate together.

In one embodiment, the totally counted number of serving cells scheduled by the first PDCCH candidate is a number of virtual serving cells corresponding to all serving cells scheduled by the first PDCCH candidate together.

In one embodiment, the totally counted number of serving cells scheduled by the first PDCCH candidate is a totally counted number of serving cells scheduled by the first PDCCH candidate.

In one embodiment, the totally counted number of serving cells scheduled by the first PDCCH candidate is a totally counted number of all serving cells included in a cell group with an active BWP in the scheduling cell using the first subcarrier spacing.

In one embodiment, the totally counted number of serving cells scheduled by the first PDCCH candidate is a weight jointly occupied by all serving cells scheduled by the first PDCCH candidate while calculating the first threshold and the second threshold.

In one embodiment, the totally counted number of serving cells scheduled by the first PDCCH candidate is a parameter value representing all serving cells scheduled by the first PDCCH candidate while calculating the first threshold and the second threshold.

In one embodiment, the totally counted number of serving cells scheduled by the first PDCCH candidate is a non-negative integer.

In one embodiment, the totally counted number of serving cells scheduled by the first PDCCH candidate may be a non-integer.

In one embodiment, the serving cells scheduled by the first PDCCH candidate are all serving cells simultaneously scheduled by the first PDCCH candidate.

In one embodiment, the serving cells scheduled by the first PDCCH candidate are counted as only one serving cell.

In one embodiment, the serving cells scheduled by the first PDCCH candidate are virtualized as one serving cell.

In one embodiment, the counted number of serving cells scheduled by the first PDCCH candidate is equal to 1.

In one embodiment, the counted number of serving cells scheduled by the first PDCCH candidate is predefined or configured.

In one embodiment, a default value of the counted number of serving cells scheduled by the first PDCCH candidate (or when the configuration signaling is default) is equal to the number of serving cells scheduled by the first PDCCH candidate.

In one embodiment, a default value of the counted number of serving cells scheduled by the first PDCCH candidate (or when the configuration signaling is default) is equal to 1.

In one embodiment, serving cells scheduled by the first PDCCH candidate are virtualized (or deemed equivalently) as N1 serving cell(s), where N1 may be either an integer or a non-integer and the N1 is not less than 0.

In one embodiment, the statement that "a totally counted number of serving cells scheduled by the first PDCCH candidate is used to determine the characteristic proportional value" includes the following meaning: the totally counted number of serving cells scheduled by the first PDCCH candidate is used by the first node of the present application to determine the characteristic proportional value.

In one embodiment, the statement that "a totally counted number of serving cells scheduled by the first PDCCH candidate is used to determine the characteristic proportional value" and the statement that "a totally counted number of serving cells scheduled by the first PDCCH candidate is used to calculate the characteristic proportional value" are equivalent or may be used interchangeably.

In one embodiment, the statement that "a totally counted number of serving cells scheduled by the first PDCCH candidate is used to determine the characteristic proportional value" and the statement that "the characteristic proportional value is related to a totally counted number of serving cells scheduled by the first PDCCH candidate" are equivalent or may be used interchangeably.

In one embodiment, the statement that "a totally counted number of serving cells scheduled by the first PDCCH candidate is used to determine the characteristic proportional value" includes the following meaning: the characteristic proportional value is equal to a ratio of a first value to a second value, and the totally counted number of serving cells scheduled by the first PDCCH candidate is used to determine at least one of the first value or the second value.

In one embodiment, the statement that "a totally counted number of serving cells scheduled by the first PDCCH candidate is used to determine the characteristic proportional value" includes the following meaning: the characteristic proportional value is equal to a ratio of a first value to a second value, and the totally counted number of serving cells scheduled by the first PDCCH candidate is used to determine the first value, and the second value is related to the number of serving cells included in the first cell group of this application.

In one embodiment, the statement that "a totally counted number of serving cells scheduled by the first PDCCH candidate is used to determine the characteristic proportional value" includes the following meaning: the characteristic proportional value is equal to a ratio of a sum of the counted numbers of all serving cells (either virtualized or equivalently) included in the first cell group that are scheduled by scheduling cells using the first subcarrier spacing to a basic number, the basic number being equal to a sum of the counted numbers of all serving cells(either virtualized or equivalently) included in the first cell group.

In one embodiment, the statement that "a totally counted number of serving cells scheduled by the first PDCCH candidate is used to determine the characteristic proportional value" includes the following meaning: the product of the counted number of serving cells scheduled by the first PDCCH candidate and the first scaling factor is used to determine the characteristic proportional value, the first scaling factor is no less than 0, and the first scaling factor is pre-defined or is configured or is indicated by the capability report of the first node of the present application.

In one embodiment, the statement that "a totally counted number of serving cells scheduled by the first PDCCH candidate is used to determine the characteristic proportional value" includes the following meaning: the first cell group of this application includes M1 cell subset(s), and M1 quantity value(s) is(are) the number(s) of serving cells respectively counted for the M1 cell subset(s), the serving cells scheduled by the first PDCCH candidate compose one of the M1 cell subset(s), and the counted number of serving cells scheduled by the first PDCCH candidate is equal to one of the M1 quantity value(s); any one of the M1 quantity value(s) is not less than 0, and one of the M1 quantity value(s) may either be an integer or anon-integer, M1 being a positive integer; the M1 cell subset(s) includes/include M2 cell subset(s), M2 being a positive integer no greater than the M1; any serving cell included in any one of the M2 cell subset(s) is scheduled by a scheduling cell using the first subcarrier spacing; the characteristic proportional value is equal to a ratio between a sum of the M2 quantity value(s) and a sum of the M1 quantity value(s).

## Embodiment 12

Embodiment 12 illustrates a structure block diagram of a processing device in a first node in an example, as shown in FIG. 12. In FIG. 12, a processing device 1200 in the first node comprises a first transceiver 1201 and a first receiver 1202. The first transceiver 1201 comprises the transmitter/receiver 456 (comprising the antenna 460), the receiving processor 452, the transmitting processor 455 and the controller/processor 490 in FIG. 4 of the present application; the first receiver 1202 comprises the transmitter/receiver 456 (comprising the antenna 460), the receiving processor 452 and the controller/processor 490 in FIG. 4 of the present application.

In Embodiment 12, the first transceiver 1201 receives a first information block, the first information block being used to determine multiple PDCCH (Physical Downlink Control Chanel) candidates, any one of the multiple PDCCH candidates occupying at least one CCE (Control Channel Element); and the first receiver 1202 monitors at least one PDCCH candidate; herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate.

In one embodiment, the first transceiver 1201 receives a second information block, the second information block being used to determine a first cell group, the first cell group comprising multiple serving cells; each serving cell in the first cell group corresponds to a scheduling indication value, and a target cell subset comprises serving cells in the first cell group that correspond to a same equal scheduling indication value and are scheduled by a target scheduling cell; the second PDCCH candidate belongs to the target scheduling cell, the equal scheduling indication value corresponding to the serving cells in the target cell subset being used to determine a scheduling indication value associated with the second PDCCH candidate; at least one of a number of bits included in at least one field included in a DCI format carried by the second PDCCH candidate or a number of fields included in the DCI format carried by the second PDCCH candidate is related to a number of serving cells included in the target cell subset.

In one embodiment, a first cell subset includes the serving cell(s) scheduled by the first PDCCH candidate, and a second cell subset includes the serving cell(s) scheduled by the second PDCCH candidate; a relationship between the first cell subset and the second cell subset is used to determine whether a number of monitoring times of PDCCH candidate(s) for the first cell subset and a number of monitoring times of PDCCH candidate(s) for the second cell subset are separately counted.

In one embodiment, a search space set to which the first PDCCH candidate belongs is a first search space set, and a control resource set associated with the first search space set is a first control resource set, the first control resource set including multiple CCEs, and the scheduling indication value associated with the first PDCCH candidate is used to determine a CCE subset occupied by the first PDCCH candidate in the first control resource set.

In one embodiment, the first transceiver 1201 transmits a third information block, herein, the third information block is used to indicate a capability parameter set of a transmitter of the third information block, the capability parameter set of the transmitter of the third information block including a first parameter and a second parameter; the first parameter is used to indicate whether a transmitter of the third information block supports a number of downlink serving cells scheduled by a same PDCCH being greater than 1, while the second parameter is used to indicate whether the transmitter of the third information block supports a number of uplink serving cells scheduled by a same PDCCH being greater than 1.

In one embodiment, each CCE occupied by the first PDCCH candidate belongs to a first time window in time domain, and a subcarrier spacing (SCS) of subcarriers occupied in frequency domain by each CCE occupied by the first PDCCH candidate is equal to a first SCS; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the first threshold and the second threshold are both related to a characteristic proportional value, and a totally counted number of serving cells scheduled by the first PDCCH candidate is used to determine the characteristic proportional value, the characteristic proportional value being no less than 0.

## Embodiment 13

Embodiment 13 illustrates a structure block diagram of a processing device in a second node in an example, as shown in FIG. 13. In FIG. 13, a processing device 1300 in the second node comprises a second transceiver 1301 and a first transmitter 1302. The second transceiver 1301 comprises the transmitter/receiver 416 (comprising the antenna 460), the receiving processor 412, the transmitting processor 415 and the controller/processor 440 in FIG. 4 of the present application; the first transmitter 1302 comprises the transmitter/receiver 416 (comprising the antenna 460), the transmitting processor 415 and the controller/processor 440 in FIG. 4 of the present application.

In Embodiment 13, the second transceiver 1301 transmits a first information block, the first information block being used to determine multiple PDCCH (Physical Downlink Control Chanel) candidates, any one of the multiple PDCCH candidates occupying at least one CCE (Control Channel Element); and the first transmitter 1302 determines at least one PDCCH candidate; herein, a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions : an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

In one embodiment, the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate.

In one embodiment, the second transceiver 1301 transmits a second information block; herein, the second information block is used to determine a first cell group, the first cell group including multiple serving cells; each serving cell in the first cell group corresponds to a scheduling indication value, and a target cell subset comprises serving cells in the first cell group that correspond to a same equal scheduling indication value and are scheduled by a target scheduling cell; the second PDCCH candidate belongs to the target scheduling cell, the equal scheduling indication value corresponding to the serving cells in the target cell subset being used to determine a scheduling indication value associated with the second PDCCH candidate; at least one of a number of bits included in at least one field included in a DCI format carried by the second PDCCH candidate or a number of fields included in the DCI format carried by the second PDCCH candidate is related to a number of serving cells included in the target cell subset.

In one embodiment, a first cell subset includes the serving cell(s) scheduled by the first PDCCH candidate, and a second cell subset includes the serving cell(s) scheduled by the second PDCCH candidate; a relationship between the first cell subset and the second cell subset is used to determine whether a number of monitoring times of PDCCH candidate(s) for the first cell subset and a number of monitoring times of PDCCH candidate(s) for the second cell subset are separately counted.

In one embodiment, a search space set to which the first PDCCH candidate belongs is a first search space set, and a control resource set associated with the first search space set is a first control resource set, the first control resource set including multiple CCEs, and the scheduling indication value associated with the first PDCCH candidate is used to determine a CCE subset occupied by the first PDCCH candidate in the first control resource set.

In one embodiment, the second transceiver 1301 receives a third information block, herein, the third information block is used to indicate a capability parameter set of a transmitter of the third information block, the capability parameter set of the transmitter of the third information block including a first parameter and a second parameter; the first parameter is used to indicate whether a transmitter of the third information block supports a number of downlink serving cells scheduled by a same PDCCH being greater than 1, while the second parameter is used to indicate whether the transmitter of the third information block supports a number of uplink serving cells scheduled by a same PDCCH being greater than 1.

In one embodiment, each CCE occupied by the first PDCCH candidate belongs to a first time window in time domain, and a subcarrier spacing (SCS) of subcarriers occupied in frequency domain by each CCE occupied by the first PDCCH candidate is equal to a first SCS; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the first threshold and the second threshold are both related to a characteristic proportional value, and a totally counted number of serving cells scheduled by the first PDCCH candidate is used to determine the characteristic proportional value, the characteristic proportional value being no less than 0.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present

**EP 4 486 037 A1**

application is not limited to any combination of hardware and software in specific forms. The first node or the second node, or UE or terminal includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The base station or network equipment in the present application includes but is not limited to macro-cellular base stations, micro-cellular base stations, home base stations, relay base station, eNB, gNB, Transmitter Receiver Point (TRP), relay satellite, satellite base station, airborne base station and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

**Claims**

1. A first node for wireless communications, comprising:

   a first transceiver, receiving a first information block, the first information block being used to determine multiple PDCCH (Physical Downlink Control Chanel) candidates, any one of the multiple PDCCH candidates occupying at least one CCE (Control Channel Element); and
   a first receiver, monitoring at least one PDCCH candidate;
   wherein a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

2. The first node according to claim 1, **characterized in that** the number of the serving cell(s) scheduled by the second PDCCH candidate is greater than the number of the serving cell(s) scheduled by the first PDCCH candidate; or the number of the serving cell(s) scheduled by the second PDCCH candidate is equal to the number of the serving cell(s) scheduled by the first PDCCH candidate and the index of the second PDCCH candidate is smaller than the index of the first PDCCH candidate.

3. The first node according to claim 1 or 2, **characterized in that** the first transceiver receives a second information block; wherein the second information block is used to determine a first cell group, the first cell group including multiple serving cells; each serving cell in the first cell group corresponds to a scheduling indication value, and a target cell subset comprises serving cells in the first cell group that correspond to a same equal scheduling indication value and are scheduled by a target scheduling cell; the second PDCCH candidate belongs to the target scheduling cell, the equal scheduling indication value corresponding to the serving cells in the target cell subset being used to determine a scheduling indication value associated with the second PDCCH candidate; at least one of a number of bits included in at least one field included in a DCI format carried by the second PDCCH candidate or a number of fields included in the DCI format carried by the second PDCCH candidate is related to a number of serving cells included in the target cell subset.

4. The first node according to any of claims 1-3, **characterized in that** a first cell subset includes the serving cell(s) scheduled by the first PDCCH candidate, and a second cell subset includes the serving cell(s) scheduled by the second PDCCH candidate; a relationship between the first cell subset and the second cell subset is used to determine whether a number of monitoring times of PDCCH candidate(s) for the first cell subset and a number of monitoring times of PDCCH candidate(s) for the second cell subset are separately counted.

5. The first node according to any of claims 1-4, **characterized in that** a search space set to which the first PDCCH candidate belongs is a first search space set, and a control resource set associated with the first search space set is a first control resource set, the first control resource set including multiple CCEs, and the scheduling indication value associated with the first PDCCH candidate is used to determine a CCE subset occupied by the first PDCCH candidate in the first control resource set.

6. The first node according to any of claims 1-5, **characterized in that** the first transceiver transmits a third information block; wherein the third information block is used to indicate a capability parameter set of a transmitter of the third information block, the capability parameter set of the transmitter of the third information block including a first parameter and a second parameter; the first parameter is used to indicate whether a transmitter of the third information block supports a number of downlink serving cells scheduled by a same PDCCH being greater than 1, while the second parameter is used to indicate whether the transmitter of the third information block supports a number of uplink serving cells scheduled by a same PDCCH being greater than 1.

7. The first node according to any of claims 1-6, **characterized in that** each CCE occupied by the first PDCCH candidate belongs to a first time window in time domain, and a subcarrier spacing (SCS) of subcarriers occupied in frequency domain by each CCE occupied by the first PDCCH candidate is equal to a first SCS; a number of PDCCH candidate(s) using the first SCS being monitored in the first time window is no greater than a first threshold, and a number of non-overlapped CCE(s) using the first SCS being monitored in the first time window is no greater than a second threshold, the first threshold being a positive integer and the second threshold being a positive integer; the first threshold and the second threshold are both related to a characteristic proportional value, and a totally counted number of serving cells scheduled by the first PDCCH candidate is used to determine the characteristic proportional value, the characteristic proportional value being no less than 0.

8. A second node for wireless communications, comprising:

a second transceiver, transmitting a first information block, the first information block being used to determine multiple PDCCH (Physical Downlink Control Chanel) candidates, any one of the multiple PDCCH candidates occupying at least one CCE (Control Channel Element); and
a first transmitter, determining at least one PDCCH candidate;
wherein a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

9. A method in a first node for wireless communications, comprising:

receiving a first information block, the first information block being used to determine multiple PDCCH (Physical Downlink Control Chanel) candidates, any one of the multiple PDCCH candidates occupying at least one CCE (Control Channel Element); and
monitoring at least one PDCCH candidate;
wherein a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

**10.** A method in a second node for wireless communications, comprising:

transmitting a first information block, the first information block being used to determine multiple PDCCH (Physical Downlink Control Chanel) candidates, any one of the multiple PDCCH candidates occupying at least one CCE (Control Channel Element); and
determining at least one PDCCH candidate;
wherein a first PDCCH candidate is one of the multiple PDCCH candidates, and whether there is a second PDCCH candidate among the multiple PDCCH candidates is used to determine whether the first PDCCH candidate is counted for monitoring; the second PDCCH candidate and the first PDCCH candidate occupy same CCE(s); the second PDCCH candidate has a same scrambling as the first PDCCH candidate, and a DCI (Downlink Control Information) format carried by the second PDCCH candidate is of the same size as a DCI format carried by the first PDCCH candidate; a scheduling indication value associated with the first PDCCH candidate is equal to a scheduling indication value associated with the second PDCCH candidate, and at least one of a number of serving cell(s) scheduled by the first PDCCH candidate or a number of serving cell(s) scheduled by the second PDCCH candidate is greater than 1; at least one of two conditions: an index of the second PDCCH candidate is not equal to an index of the first PDCCH candidate or the number of the serving cell(s) scheduled by the second PDCCH candidate is not equal to the number of the serving cell(s) scheduled by the first PDCCH candidate, is satisfied.

100

receiving first information block ——101

↓

monitoring at least one PDCCH candidate ——102

FIG. 1

5GS/EPS 200

NR-RAN/EUTRAN **202**

HSS/UDM ⌐220

MME/AMF/SMF ⌐211

other MMEs/AMFs/SMFs ⌐214

UE ⌐201

NR/evolved node B ⌐203

other NR/evolved nodes B ⌐204

UE ⌐241

S-GW/UPF ⌐212

P-GW/UPF ⌐213

Internet service ⌐230

5GC/EPC **210**

FIG. 2

Control plane 300

L3 | RRC ⌐306

305 ⌐

L2 | PDCP ⌐304

RLC ⌐303

MAC ⌐302

L1 | PHY ⌐301

User plane 350

355 ⌐ | L2 | SDAP ⌐356

PDCP ⌐354

RLC ⌐353

MAC ⌐352

L1 | PHY ⌐351

FIG. 3

**410** **450**

**420** **460**

**415** **416** **456** **455**

Transmitting processor

**440**

Controller /processor

Transmitter
Receiver

**420**

Transmitter
Receiver

**460**

Transmitter
Receiver

Transmitter
Receiver

Transmitting processor

**490**

Controller /processor

Memory

Receiving processor

Receiving processor

Memory

**430** **412** **416** **456** **452** **480**

FIG. 4

FIG. 5

FIG. 6

a serving cell in first cell group

a serving cell in target cell subset

Frequency

FIG. 7

a serving cell in the second cell subset

a serving cell in the first cell subset

Frequency

**Case A**

a serving cell in the second cell subset

a serving cell belonging to both the first cell subset and the second cell subset

Frequency

**Case B**

FIG. 8

a scheduling indication value associated with the first PDCCH candidate

first PDCCH candidate

FIG. 9

FIG. 10

FIG. 11

FIG. 12

FIG. 13

<div style="text-align:center">**INTERNATIONAL SEARCH REPORT**</div>

| International application No. |
| --- |
| **PCT/CN2023/082453** |

**A.    CLASSIFICATION OF SUBJECT MATTER**

H04W72/12(2023.01)i

According to International Patent Classification (IPC) or to both national classification and IPC

**B.    FIELDS SEARCHED**

Minimum documentation searched (classification system followed by classification symbols)

IPC: H04W; H04L; H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; WOTXT: PDCCH, 候选, 备选, CCE, 扰码, DCI, 格式, 尺寸, 调度, 索引, 监测次数, 关联, candidate, alternative, scrambling code, format, size, scheduling, index, number of monitoring, association

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114257361 A (SHANGHAI LANGBO COMMUNICATION TECHNOLOGY CO., LTD.) 29 March 2022 (2022-03-29)<br>      description paragraphs [0034] to [0145] | 1-10 |
| X | VIVO. ""R1-1804267_Handling of PDCCH on rate matching resource""<br>*3GPP tsg_ran\WG1_RL1*, 06 April 2018 (2018-04-06),<br>      section 2 | 1-10 |
| A | CN 112437488 A (QUECTEL WIRELESS SOLUTIONS CO., LTD.) 02 March 2021 (2021-03-02)<br>      entire document | 1-10 |
| A | CN 113498181 A (SHANGHAI LANGBO COMMUNICATION TECHNOLOGY CO., LTD.) 12 October 2021 (2021-10-12)<br>      entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 July 2023** | **07 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/082453**

| Patent document cited in search report | | | Publication date (day/month/year) | Patent family member(s) | Publication date (day/month/year) |
|---|---|---|---|---|---|
| CN | 114257361 | A | 29 March 2022 | None | |
| CN | 112437488 | A | 02 March 2021 | None | |
| CN | 113498181 | A | 12 October 2021 | None | |

Form PCT/ISA/210 (patent family annex) (July 2022)